Europäisches Patentamt

European Patent Office

Office européen des brevets

(19)

(11) **EP 0 571 239 B1**

## (12) FASCICULE DE BREVET EUROPEEN

(45) Date de publication et mention
de la délivrance du brevet:
**24.01.1996 Bulletin 1996/04**

(51) Int Cl.$^6$: **G05D 1/08**, B64G 1/24

(21) Numéro de dépôt: **93401107.3**

(22) Date de dépôt: **28.04.1993**

(54) **Procédé et dispositif d'acquisition de la Terre via la Polaire pour satellite stabilisé 3-axes en orbite de faible inclinaison**

Verfahren und Vorrichtung zur Erdgewinnung mit Hilfe des Polarsterns für einen Dreiachs-stabilisierten Satelliten

Process and device for earth acquisition via the polar star for triaxially stabilised satellite on a small inclination orbit

(84) Etats contractants désignés:
**DE ES GB IT NL SE**

(30) Priorité: **19.05.1992 FR 9206050**

(43) Date de publication de la demande:
**24.11.1993 Bulletin 1993/47**

(73) Titulaire:
**AEROSPATIALE Société Nationale Industrielle
F-75781 Paris Cédex 16 (FR)**

(72) Inventeurs:
• **Achkar, Issam-Maurice
F-06150 Cannes-La-Bocca (FR)**
• **Guillermin, Pierre
F-06200 Nice (FR)**
• **Renault, Hervé
F-06400 Cannes (FR)**

(74) Mandataire: **Rinuy, Santarelli
F-75017 Paris (FR)**

(56) Documents cités:
EP-A- 0 209 429          EP-A- 0 267 086
EP-A- 0 338 687          EP-A- 0 363 244
EP-A- 0 461 394          EP-A- 0 493 143
EP-A- 0 493 227          EP-A- 0 493 228
FR-A- 2 522 614          US-A- 5 109 346

## Description

La présente invention concerne un procédé et un dispositif d'acquisition Terre pour un satellite stabilisé 3-axes en orbite terrestre faiblement inclinée sur l'Equateur (moins de 10 degrés), visant à ramener le satellite d'un état de veille ou de sauvegarde en pointage solaire vers son attitude nominale en pointage Terre.

Ainsi qu'on le sait, les trois axes selon lesquels on cherche à stabiliser en attitude nominale un satellite sont respectivement un axe dirigé vers la Terre couramment noté Z et appelé axe de lacet, un axe perpendiculaire au plan de l'orbite noté Y et appelé axe de tangage et un axe X complétant le trièdre orthonormé direct et appelé axe de roulis.

En plus, tout satellite de télécommunications ou d'observation (missions typiques en orbite de faible inclinaison) stabilisé 3-axes dispose d'au moins un détecteur de Terre 2-axes et de deux détecteurs solaires 1-axe à axes orthogonaux (ou d'un seul détecteur solaire 2-axes) de champs de vue sensiblement disjoints de celui du détecteur terrestre pour la détection des erreurs d'attitude, ainsi que de gyromètres pour la mesure de vitesses angulaires sur les trois axes.

La génération de couples de commande pour le changement d'attitude et/ou des vitesses angulaires se fait en général à l'aide d'actionneurs tels que des roues (cinétiques ou de réaction) et/ou des tuyères.

Cet ensemble de détecteurs et d'actionneurs associés à une ou plusieurs électroniques pour le traitement des mesures et le calcul des couples de commande constitue ce qu'on appelle couramment le "système de contrôle d'attitude et d'orbite (SCAO)" du satellite.

En cas de panne grave du SCAO sur l'orbite nominale, ou bien suite à une télécommande erronée envoyée par la station sol de contrôle, il arrive que le satellite s'écarte de son attitude nominale et se mette en mode de sauvegarde solaire avec l'axe X pointé vers le Soleil (c'est en pratique selon cet axe X que sont positionnés les détecteurs solaires 1-axe) et les axes Y et Z en rotation autour de X à vitesse constante (typiquement 0.5 degré/sec). Entre temps, le cas échéant, un système générateur de moment cinétique (roues) aura été commandé pour réduire à zéro un éventuel moment cinétique en moyenne non nul du satellite de manière à faciliter sa mise en rotation autour de la direction du Soleil. Dans ce dernier mode, le Soleil est constamment en visibilité des détecteurs solaires alors que la Terre est généralement non visible par le détecteur de Terre.

En fait ce mode de pointage solaire peut aussi correspondre à un état nominal de veille, comme par exemple en phase de mise à poste lorsque le satellite se trouve sur une orbite de transfert.

Une fois que la panne a été traitée et corrigée, soit à bord soit à partir du sol, ou au moment de la cessation de l'état de veille, il est donc nécessaire pour le satellite de (ré)acquérir la Terre afin de (re)prendre le fonctionnement nominal de la mission. En pratique courante (notamment sur EUTELSAT-II), la recherche de la Terre s'effectue grâce à la rotation autour d'un axe aligné sur la direction du Soleil par rapport à un repère de référence, constamment mesurée à bord au moyen des détecteurs solaires, et ce jusqu'à ce que la Terre entre dans le champ de vue du détecteur de Terre : la rotation est alors arrêtée et la capture Terre enclenchée. Or il existe des périodes de la journée où une telle rotation ne peut être réalisée et ce notamment entre 20 h p.m. et 04 h p.m. (heure solaire du satellite), période pendant laquelle le soleil n'est en général pas en visibilité des détecteurs solaires 2-axes nécessaires à l'asservissement de l'axe de rotation autour duquel se fait le mouvement conique permettant à l'axe Z de croiser la Terre. Dans ce cas, une méthode plus générale utilisant par exemple un détecteur stellaire - en plus des détecteurs solaire et terrestre - est nécessaire pour que l'on puisse acquérir la Terre même si la géométrie Terre/-Satellite/Soleil n'est pas favorable.

Des concepts de contrôle d'attitude d'un satellite utilisant, en plus des détecteurs solaire et terrestre, un détecteur stellaire sont déjà connus et font, entre autres, l'objet du brevet FR-2.522.614 du Centre National d'Etudes Spatiales (invention de MOUILHARAT, DUCHON, GUILBERT et ROLFO) pour "Configuration de satellite à orbite équatoriale à moyens solaires perfectionnés", du brevet FR-2.637.565 de l'AEROSPATIALE (invention de MAUTE) pour "Système de contrôle actif selon trois axes d'un satellite géostationnaire", et du brevet EP-0.338.687 de BRITISH AEROSPACE (invention de MATTHEWS) pour "Method of and apparatus for returning an earth orbiting spacecraft to an earth pointing attitude after displacement therefrom".

Dans le premier brevet rien n'est précisé concernant l'acquisition de la Terre à partir du mode pointé Soleil, d'autant que le satellite comporte une plate-forme et une charge utile mobile en rotation par rapport à la plate-forme, entre lesquelles sont répartis les détecteurs.

Le second brevet suggère pour le passage du mode pointé solaire au mode nominal, le principe d'un balayage d'une suite d'étoiles par un détecteur stellaire lors de la rotation du satellite autour de son axe de roulis, dans une attitude telle que cet axe de roulis reste parallèle à la projection de la direction du Soleil dans le plan de l'Equateur, suivi d'une rotation en tangage autour de la direction définie par l'Etoile Polaire pour réacquérir la Terre grâce au détecteur de Terre. Ce document est toutefois très vague sur les modalités de mise en oeuvre pratique de ce principe, notamment en ce qui concerne la détection de la direction correspondant à la projection sur le plan équatorial de la direction du Soleil et puis sur l'identification de l'Etoile Polaire.

Le troisième brevet quant à lui est un peu plus précis sur le mode de réacquisition de la Terre. Il propose un satellite muni d'un détecteur de Terre 2-axes, d'un détecteur Solaire 2-axes et d'un détecteur stellaire monté sur le satellite en sorte de pouvoir détecter l'Etoile CANOPUS dans l'hémisphère SUD ; ce satellite doit en outre être muni d'un générateur de moment cinétique. Le procédé de réacquisition commence de manière classique par faire tourner le satellite tout en maintenant le détecteur solaire pointé sur le Soleil (c'est le mode classique de pointage solaire). Lorsque CANOPUS rentre dans le champ de vue du détecteur stellaire on arrête la rotation et on génère un moment cinétique par activation du générateur en sorte de lui conférer une rigidité gyroscopique autour d'une direction fixe du satellite. On poursuit la rotation autour de la direction solaire d'un angle calculé en sorte de garantir que compte tenu de la date et de la connaissance des tables astronomiques, une rotation ultérieure autour de la direction instantanée de l'axe du moment cinétique amènera la Terre dans le champ de vue du détecteur de Terre.

Cet enseignement suppose la mise en oeuvre d'un détecteur stellaire à très large champ de vue puisque CANOPUS est à plus de 35° de la direction SUD ; il est toutefois douteux qu'en toute configuration la simple rotation en mode pointé Soleil amène nécessairement CANOPUS dans le champ de vue du détecteur stellaire, à moins d'admettre que cette rotation puisse avoir lieu pendant une longue durée (plusieurs heures) ce qui serait incompatible avec la plupart des missions. En outre, rien n'est précisé concernant l'identification de CANOPUS. Enfin, l'obligation de faire tourner le satellite autour de la direction solaire après la génération du moment cinétique (a priori transversal à l'axe de rotation) induit des phénomènes parasites difficiles à contrôler du fait de la rigidité gyroscopique.

L'invention a pour objet de pallier les insuffisances et inconvénients précités en proposant un procédé et un dispositif permettant en toute configuration Terre/Satellite/Soleil une acquisition de la Terre à partir d'un mode pointé Soleil, dans un délai compatible avec les exigences des missions actuelles (typiquement moins de 30 minutes), par détection intermédiaire de façon rapide et fiable de l'Etoile Polaire (dont on sait qu'elle se trouve à moins d'un degré du Nord Géographique).

Bien entendu, pour ce faire le satellite doit disposer d'un détecteur stellaire ayant un champ de vue suffisamment large (supérieur ou égal à 2 x (inclinaison orbitale + 1 degré)) et capable de détecter l'Etoile Polaire (magnitude visuelle = 2,3). En outre, ce détecteur doit être disposé à bord tel que son axe optique soit de préférence parallèle à, ou proche de, l'axe (-Y) du satellite.

L'invention propose ainsi un procédé pour l'acquisition de la Terre par un satellite circulant sur une orbite terrestre d'inclinaison inférieure à 10° par rapport à l'Equateur, destiné à être stabilisé en attitude autour d'axes de roulis, de tangage et de lacet et comportant un système de détection terrestre 2-axes ayant un axe optique destiné à être pointé vers la Terre sensiblement parallèlement à l'axe de lacet, un système de détection stellaire 2-axes ayant un axe optique destiné à être pointé vers l'Etoile Polaire sensiblement parallèlement à l'axe de tangage, un système de détection solaire comportant un sous-système de détection solaire 2-axes ayant un axe optique sensiblement orthogonal à l'axe optique du système de détection stellaire et transversal à l'axe optique du système de détection-terrestre, selon lequel on part d'une attitude de pointage solaire dans laquelle l'axe optique du sous-système de détection solaire est pointé vers le Soleil, caractérisé en ce que :

- on commande un déplacement angulaire du satellite en sorte d'amener la direction du Soleil dans une orientation faisant, dans le champ de vue du sous-système de détection solaire, un angle $\lambda$ différent de 90° par rapport à l'axe optique du système de détection stellaire, cet angle $\lambda$ satisfaisant la relation

$$90° - \delta s - Fspx < \lambda < 90° - \delta s + Fspx$$

si $\delta s$ est l'inclinaison du Soleil par rapport à l'Equateur et si Fspx est la demi-amplitude angulaire du champ de vue du système de détection stellaire dans un plan du satellite contenant l'axe optique de ce système de détection stellaire et cette orientation,

- on provoque une rotation du satellite autour de ladite orientation en sorte de faire décrire à l'axe optique du système de détection stellaire une portion de cône d'axe dirigé vers le Soleil et de demi-angle au sommet égal à $\lambda$,

- on détecte un groupe d'au moins deux étoiles et on le compare aux étoiles contenues dans un catalogue préétabli en fonction de $\lambda$ recensant les étoiles, dont l'Etoile Polaire, susceptibles d'être détectées lors de ladite rotation autour de ladite orientation, on identifie lesdites étoiles dudit groupe, et on prédit l'instant où l'axe optique du système de détection stellaire sera sensiblement pointé vers l'Etoile Polaire,

- on freine ladite rotation avant cet instant puis on capture l'Etoile Polaire dans l'axe optique du système de détection stellaire,

- on fait tourner le satellite autour de l'axe optique du système de détection stellaire jusqu'à la détection de la Terre par le système de détection terrestre, et on capture la Terre dans l'axe optique de ce système de détection terrestre.

On appréciera que notamment la procédure d'acquisition Terre via la Polaire apporte une originalité évidente pour les phases de recherche et de capture de la Terre par rapport à celle basée sur l'étoile CANOPUS et faisant l'objet du brevet EP-0.338.687 puisqu'il n'est pas nécessaire de mettre en action un quelconque dispositif générateur de moment cinétique (une ou plusieurs roues cinétiques) pour l'exécution de la phase de recherche Terre ni de corriger l'orientation du moment cinétique en phase de capture Terre. Il en résulte ainsi une simplification appréciable des lois de contrôle : contrôle 3-axes classique uniquement, sans moment cinétique embarqué.

Selon des dispositions préférées de l'invention, éventuellement combinées :

- l'axe optique dudit sous-système de détection solaire est parallèle à l'axe de roulis,
- ladite orientation de la direction du Soleil dans le champ de vue du sous-système de détection solaire est sensiblement coplanaire aux axes optiques dudit sous-système de détection solaire et du système de détection stellaire,
- lors de la rotation autour de ladite orientation, on relève pour chaque étoile du groupe, ses coordonnées dans le champ de vue du système de détection stellaire, et on compare la distance entre deux des étoiles du groupe, à la distance prédite par le catalogue pour chaque couple d'étoiles en faisant partie et on identifie lesdites deux étoiles du groupe au couple d'étoile du catalogue ayant cette même distance, à un écart prédéterminé près,
- on mesure en outre pour chaque étoile une grandeur représentative de sa brillance et les deux étoiles entre lesquelles on mesure la distance sont les deux étoiles du groupe qui sont les plus brillantes,
- ledit catalogue contient entre 10 et 300 étoiles caractérisées par leur magnitude, leur ascension droite et leur déclinaison par rapport à un repère inertiel de référence,
- on détecte ledit groupe d'étoile au cours d'une course de rotation autour de ladite orientation ayant une amplitude angulaire au plus égale à 180°.

L'invention propose également un dispositif pour l'acquisition de la Terre, à partir d'un mode pointé Soleil, par un satellite circulant sur une orbite terrestre d'inclinaison inférieure à 10° par rapport à l'Equateur, destiné à être stabilisé en attitude autour d'axes de roulis, de tangage et de lacet et comportant un système de détection terrestre 2-axes ayant un axe optique destiné à être pointé vers la Terre sensiblement parallèlement à l'axe de lacet, un système de détection stellaire 2-axes ayant un axe optique destiné à être pointé vers l'Etoile Polaire sensiblement parallèlement à l'axe de tangage, un système de détection solaire comportant un sous-système de détection solaire 2-axes ayant un axe optique sensiblement orthogonal à l'axe optique du système de détection stellaire et transversal à l'axe optique du système de détection terrestre, un ensemble de détection de vitesses angulaires adapté à donner des mesures de vitesse autour de trois axes, un ensemble d'actionnement destiné à générer des couples de commande sur le satellite et un ensemble de traitement connecté entre les systèmes de détection et l'ensemble de détection de vitesses angulaires et l'ensemble d'actionnement et adapté à générer des ordres de commande pour cet ensemble d'actionnement à partir de signaux de mesure fournis par ces systèmes de détection et cet ensemble de détection de vitesses angulaires, ce dispositif étant contenu dans l'ensemble de traitement et caractérisé en ce qu'il comporte :

- un bloc logique de traitement des mesures adapté à déterminer à partir de ces signaux de mesure des coordonnées dans le repère des axes de roulis, tangage et lacet de la direction du Soleil et de la vitesse instantanée du satellite ainsi que des angles de roulis, tangage et lacet,
- un bloc logique d'identification de la Polaire adapté, à partir des signaux de mesure du système de détection stellaire et des coordonnées et angles fournis par le bloc logique de traitement de mesures, à identifier des étoiles détectées par le système de détection stellaire à des étoiles contenues dans un catalogue, à prévoir la venue de l'Etoile Polaire dans ce système de détection stellaire, et à générer des données d'identification,
- un bloc d'enchaînement de sous-modes d'acquisition adapté à générer, à partir des coordonnées et angles fournis par le bloc logique de traitement de mesures et des données d'identification fournies par le bloc logique d'identification de la Polaire, des signaux de sélection de sous-mode d'acquisition, et
- un bloc logique de commande d'attitude adapté à générer, à partir des signaux de sélection de sous-mode d'acquisition et des coordonnées et angle fournis par le bloc logique de traitement de mesures, des signaux de commande appliqués à l'ensemble d'actionnement élaborés en sorte :

  * dans un premier sous-mode, de faire balayer à l'axe optique du système de détection stellaire une portion de cône autour de la direction du Soleil ayant un demi-angle au sommet au moins approximativement égal à l'écart angulaire entre les direction respectives du Soleil et de l'Etoile Polaire,
  * dans un second sous-mode, de freiner la rotation du satellite,
  * dans un troisième sous-mode, de capturer la Polaire dans le système de détection stellaire,
  * dans un quatrième sous-mode de faire tourner en tangage le satellite en maintenant la Polaire capturée,
  * dans un cinquième sous-mode, de capturer la Terre dans le système de détection terrestre.

Selon d'autres dispositions préférées de l'invention, éventuellement combinées :

- les données d'identification générées par le bloc logique d'identification de la Polaire contiennent un signal binaire changeant de niveau lorsque l'Etoile Polaire est identifiée et un signal angulaire, représentant l'écart angulaire entre la direction polaire et l'axe optique du système de détection stellaire,
- le bloc logique de commande d'attitude comporte un ensemble de régulateurs et de limiteurs propres à chaque sous-mode,
- les régulateurs sont linéaires,

- le bloc logique de commande d'attitude comporte des filtres à la sortie de l'ensemble de régulateurs et de limiteurs,
- les filtres sont de type digital du second ordre,
- le bloc logique de commande d'attitude comporte des modulateurs à la sortie des filtres,
- les modulateurs sont de type PRM, c'est-à-dire "Pseudo-Rate Modulator",
- l'ensemble d'actionnement comporte des tuyères et le bloc logique de commande d'attitude comporte une logique de sélection de tuyères,
- la logique de sélection de tuyères est câblée ou implantée dans une mémoire embarquée faisant partie d'un calculateur de bord.

Des objets, caractéristiques et avantages de l'invention ressortent de la description qui suit, donnée à titre d'exemple non limitatif, en regard des dessins annexés sur lesquels :

- la figure 1 est une vue schématique en perspective d'un satellite conforme à l'invention,
- la figure 2 est un schéma définissant les notions de repère inertiel et de repère orbital local,
- la figure 3 est un schéma définissant les angles de roulis, tangage et lacet,
- la figure 4 est un schéma définissant les angles de mesure du détecteur terrestre,
- la figure 5 est un schéma fonctionnel d'un dispositif d'acquisition de la Terre conforme à l'invention,
- la figure 6 est un schéma montrant l'attitude du satellite en configuration de pointage solaire,
- la figure 7 est un schéma montrant une première phase (recherche de l'Etoile Polaire) du procédé d'acquisition de la Terre conforme à l'invention, à partir de la configuration de la figure 6,
- la figure 8 est un schéma montrant une seconde phase de ce procédé (capture de l'Etoile Polaire),
- la figure 9 est un schéma montrant une troisième phase de ce procédé (recherche de la Terre),
- la figure 10 est un schéma montrant une quatrième phase de ce procédé (capture de la Terre),
- la figure 11 est un schéma de principe du bloc logique d'identification de la Polaire,
- la figure 12 est un schéma faisant apparaître la zone en cône creux balayée par le détecteur stellaire et contenant diverses étoiles dont la Polaire,
- la figure 13 est un ensemble de sept vues successives du détecteur stellaire,
- la figure 14 est un schéma identifiant diverses grandeurs intervenant dans l'identification de l'Etoile Polaire,
- la figure 15 est un schéma du bloc logique de régulateurs et de limiteurs,
- la figure 16 est le schéma fonctionnel d'un filtre du second ordre, et
- la figure 17 est le schéma fonctionnel d'un modulateur PRM à 1 axe.

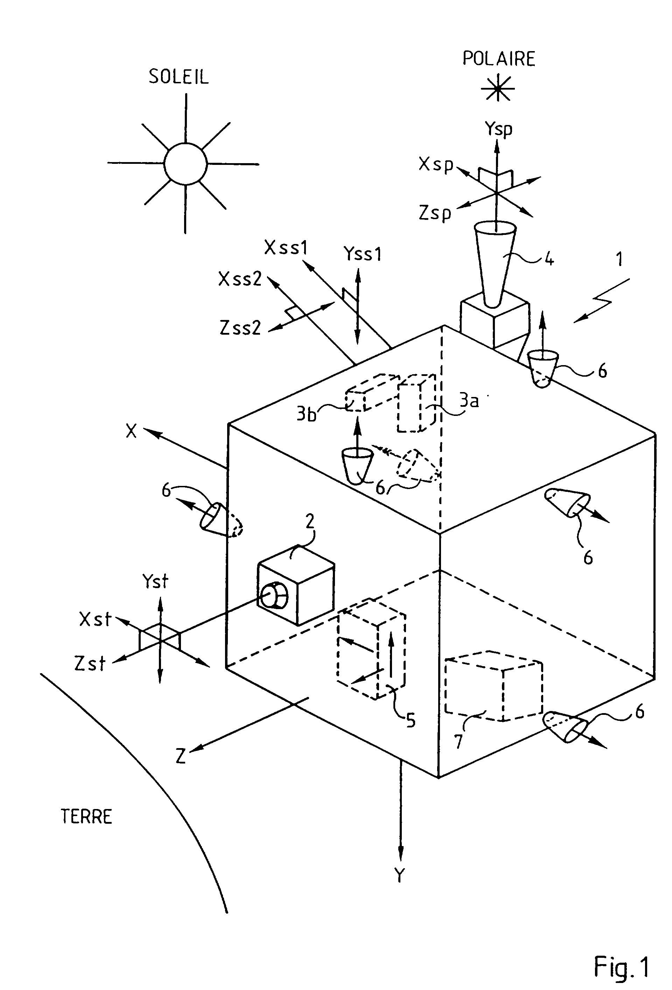

La figure 1 représente de façon schématique le corps 1 d'un satellite stabilisé 3-axes conforme à l'invention, comportant par ailleurs, de façon classique, un générateur solaire à une ou plusieurs aile(s) (non représenté).

Il est rappelé que les trois axes (en pratique des axes principaux d'inertie) selon lesquels on cherche à stabiliser ce satellite (c'est-à-dire son corps) en attitude nominale sur une orbite terrestre donnée de faible inclinaison sont, respectivement, un axe dirigé vers la Terre couramment noté Z et appelé axe de lacet, un axe perpendiculaire au plan de l'orbite et dirigé vers le sud, noté Y et appelé axe de tangage, et un axe X formant avec les axes de tangage et de lacet un trièdre (X, Y, Z) orthonormé direct, et appelé axe de roulis. En pratique, lorsque l'orbite est circulaire, cet axe de roulis est tangent à l'orbite et de préférence de même sens que la vitesse avec laquelle le satellite parcourt l'orbite. Généralement le générateur solaire est allongé parallèlement à l'axe de tangage.

Le corps 1 du satellite comporte un système de contrôle d'attitude et d'orbite comprenant au moins :

- un système de détection terrestre 2, ici formé d'un détecteur 2-axes unique, ayant un axe optique Zst parallèle ou proche de l'axe Z et deux axes de mesure Xst et Yst (en pratique orthogonaux) transversaux à l'axe optique, avantageusement proches voire parallèles aux axes X et Y du satellite, respectivement,
- un système de détection solaire comportant au moins un sous-système de détection solaire 3 ayant un axe optique Xss sensiblement transversal aux axes Z et Y, de préférence parallèle ou proche de l'axe X (ou -X) et ayant deux axes de mesure Yss et Zss (en pratique orthogonaux) avantageusement proches voire parallèle aux axes Y et Z, respectivement ; en pratique le système de détection solaire comporte en outre d'autres sous-systèmes de détection solaire 1-axe (non représentés) répartis sur le corps 1 (-X) en sorte d'assurer que le Soleil puisse être détecté par le mode pointé Soleil à tout instant ; dans l'exemple considéré le sous-système de détection solaire 3 est formé de deux détecteurs 1-axe 3a et 3b ayant respectivement comme axe de mesure unique les axes Yss et Zss précités (à la figure 1 des indices 1 et 2 sont en outre indiqués pour distinguer ces deux détecteurs),
- un système de détection stellaire 4, ici formé d'un détecteur 2-axes unique, ayant un axe optique Ysp pointé vers le Nord en sorte de pouvoir détecter l'Etoile Polaire (il est rappelé que l'Etoile Polaire est très proche du Nord) et deux axes de mesures (en pratique orthogonaux) Xsp et Zsp de préférence parallèles ou proches des axes X et Z respectivement ; ce système de détection stellaire 4 est en pratique décalé de l'axe Y d'une distance suffisante pour éviter que le générateur solaire empiète sensiblement dans son champ de vue,

- un ensemble de détection de vitesse angulaire 5, par exemple des gyromètres, pour la mesure des vitesses angulaires du satellite autour de trois axes de préférence parallèles aux axes X, Y et Z,
- un ensemble d'actionnement, ici formé de tuyères 6 au moins au nombre de six, pour la génération autour des axes X, Y et Z de couples de commande positifs ou négatifs, et
- un ensemble électronique de traitement 7, analogique ou digital, pour le traitement des mesures fournies par les systèmes de détection, et l'élaboration, grâce à des lois de contrôle classiques en soi en régime nominal de contrôle d'attitude, ou selon des lois de contrôle qui seront précisées plus loin en mode de réacquisition, des ordres de commande destinés à l'ensemble d'actionnement (au travers de filtres, limiteurs et modulateurs).

Pour faciliter la bonne compréhension de la suite, il paraît utile de préciser, voire rappeler, diverses notions et grandeurs qui seront utilisées.

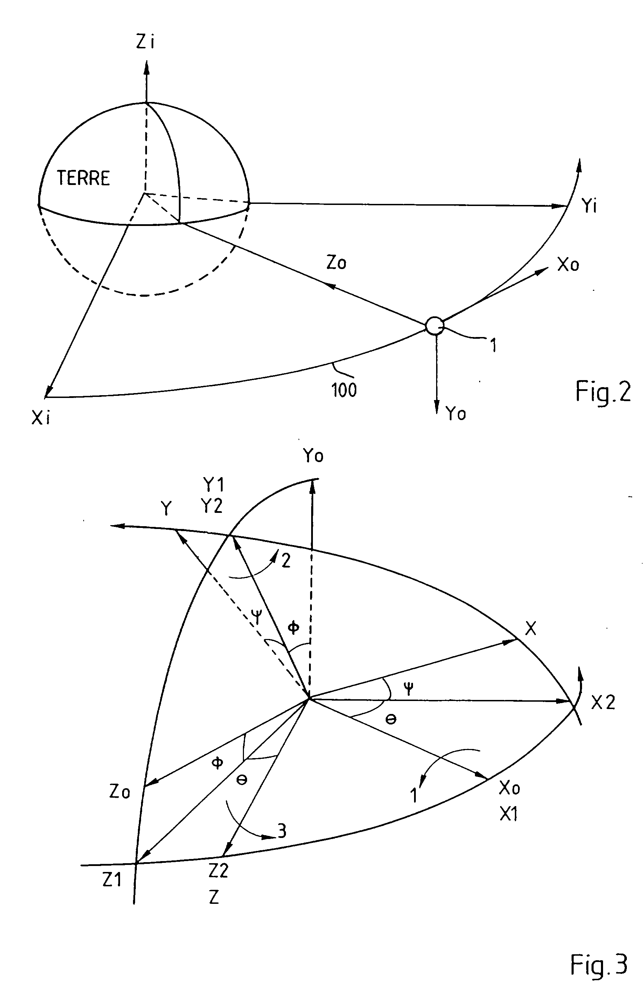

La figure 2 représente le satellite schématisé par son corps 1 suivant son orbite 100 autour de la Terre (cette orbite est ici supposée être contenue dans le plan équatorial terrestre).

On appelle repère inertiel le repère constitué d'un axe Xi en pratique orienté vers un point dit "point vernal", correspondant par convention à la direction du Soleil en 1950, le jour de l'équinoxe du printemps à 0h, d'un axe Zi pointé vers le Nord Géographique et d'un axe Yi complétant le trièdre (Xi, Yi, Zi) en sorte qu'il soit orthonormé direct.

On appelle repère orbital local le repère formé en un point donné de l'orbite où se trouve le satellite à l'instant considéré, par un axe Zo pointé vers la Terre, un axe Yo perpendiculaire au plan de l'orbite et pointé vers le Sud et un axe Xo complétant le trièdre (Xo, Yo, Zo) en sorte qu'il soit orthonormé direct.

Ce trièdre (Xo, Yo, Zo) est reporté à la figure 3 où l'on voit en outre des trièdres (X1, Y1, Z1), (X2, Y2, Z2) et (X, Y, Z) obtenus à partir de ce trièdre (Xo, Yo, Zo) après une rotation en roulis d'un angle $\Phi$, puis une rotation en tangage d'un angle $\Theta$ et enfin une rotation en lacet d'un angle $\Psi$. Ces angles définissent l'attitude du repère du satellite par rapport au repère orbital local. La consigne pour le système de contrôle d'attitude et d'orbite est en fait de superposer le repère XYZ du satellite avec ce repère (Xo, Yo, Zo).

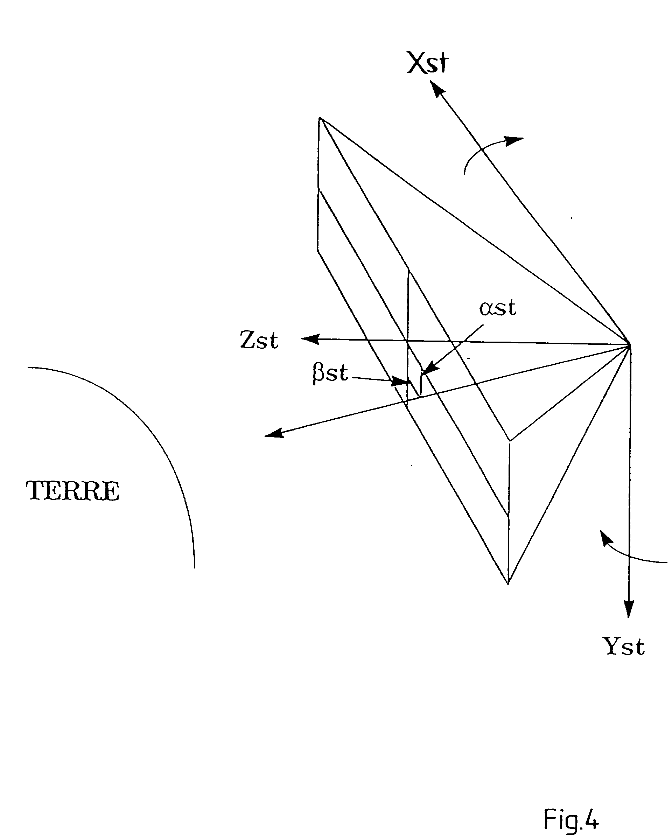

Reprenant maintenant les systèmes de détection mentionnés ci-dessus à propos de la figure 1, le détecteur constitutif du système de détection terrestre 2 a un champ de vue d'ouverture angulaire typiquement comprise entre $\pm$ 2 degrés en roulis et $\pm$ 9 degrés en tangage (zone linéaire du senseur IRES/GALILEO sur EUTELSAT II) (voir la figure 4).

On définit par les angles $\alpha$st et $\beta$st la position angulaire de la direction du centre de la Terre par rapport à l'axe Zst, ces angles étant mesurés par rapport aux axes Yst et Xst. Connaissant la matrice de passage Pst du repère (Xst, Yst, Zst) au repère (X, Y, Z) du satellite, on sait calculer à partir des angles précités à l'aide de formules trigonométriques simples, des angles de roulis et de tangage $\Phi$st et $\Theta$st.

De même, le détecteur constitutif du système de détection stellaire 4 a un champ de vue d'ouverture angulaire au moins égale à 2 x (inclinaison orbitale + 1 degré) et une sensibilité suffisante pour détecter la Polaire (dont on sait que la magnitude visuelle est d'environ 2,3). Ce détecteur délivre, pour chaque étoile détectée dans son champ de vue, une mesure de magnitude Msp (visuelle par exemple) ainsi que des coordonnées xsp et zsp du barycentre de l'étoile dans le repère (Xsp, Zsp) ; en effet ce type de détecteur ne fournit pas directement des angles ; par contre il est aisé de calculer des angles d'attitude $\alpha$sp et $\beta$sp puis, connaissant la matrice de passage Psp du repère (Xsp, Ysp, Zsp) au repère (X, Y, Z) ainsi que les composantes Pxo, Pyo et Pzo du vecteur unitaire de la direction polaire dans le repère orbital local (Xo, Yo, Zo) - composantes déterminées en fonction de la position orbitale du satellite et des composantes du vecteur unitaire de la direction polaire, dans le repère inertiel (Xi, Yi, Zi) - on sait calculer, à l'aide de formules trigonométriques simples, les angles de roulis et lacet $\Phi$sp et $\Psi$sp (bien entendu, à moins d'une panne, les angles de roulis $\Phi$st et $\Phi$sp doivent être égaux aux incertitudes de mesure près).

En ce qui concerne le sous-système 3 de détection solaire, il est formé (voir ci-dessus) de deux détecteurs 1-axe 3a et 3b ; leurs champs de vue s'étendent respectivement parallèlement à une direction unique (ces directions uniques de ces détecteurs étant orthogonales) avec une grande ouverture en pratique (typiquement +/- 60° chacun) ; chacun de ces détecteurs 3a et 3b fournit une seule grandeur NS1 ou NS2 ; il est aisé d'en déduire des mesures des angles de la direction du soleil par rapport respectivement aux axes de mesure de ces détecteurs. Connaissant les matrices de passage Pss1 et Pss2 des repères de ces détecteurs au repère satellite, et en appliquant des transformations trigonométriques simples, on- sait déterminer les composantes Sbx, Sby et Sbz du vecteur unitaire dirigé vers le Soleil dans le repère (X, Y, Z).

L'ensemble de détection de vitesse 5 fournit des mesures de vitesse (lorsqu'il est formé de gyromètres simples) soit des mesures d'incréments de rotation (lorsqu'il est formé de gyromètres intégrateurs) autour de ses trois axes sensibles. Dans ce dernier cas, ici considéré, on calcule les vitesses gyrométriques $\omega$gx, $\omega$gy et $\omega$gz à partir des incréments de rotation $\alpha$gx, $\alpha$gy et $\alpha$gz, par un traitement de différenciation par exemple, éventuellement précédé par un traitement de changement de repère lorsque les axes sensibles du système 5 ne sont pas confondus avec les axes du satellite.

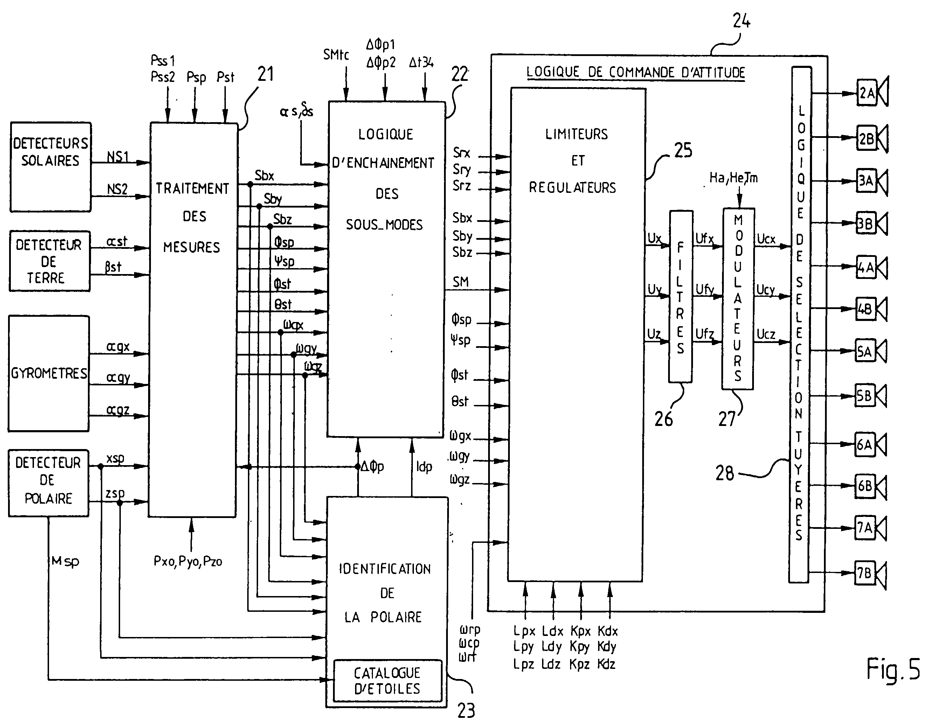

La figure 5 est un schéma fonctionnel montrant comment, selon l'invention, les divers signaux de mesure fournis

**EP 0 571 239 B1**

par les divers systèmes de détection sont utilisés pour amener, grâce à des signaux de commande appropriés appliqués à l'ensemble d'actionnement selon une succession appropriée de sous-modes, le satellite dans une attitude nominale.

Il apparaît sur cette figure que le dispositif d'acquisition permettant de recouvrer cette attitude nominale (mode d'acquisition) comporte :

- un bloc logique 21 de traitement des mesures,
- un bloc logique 22 d'enchaînement de sous-modes d'acquisition,
- un bloc logique 23 d'identification de la Polaire,
- un bloc logique de commande d'attitude 24 comportant un ensemble 25 de limiteurs et de régulateurs, un bloc 26 de filtres, un bloc 27 de modulateurs et un bloc logique 28 de sélection de tuyères.

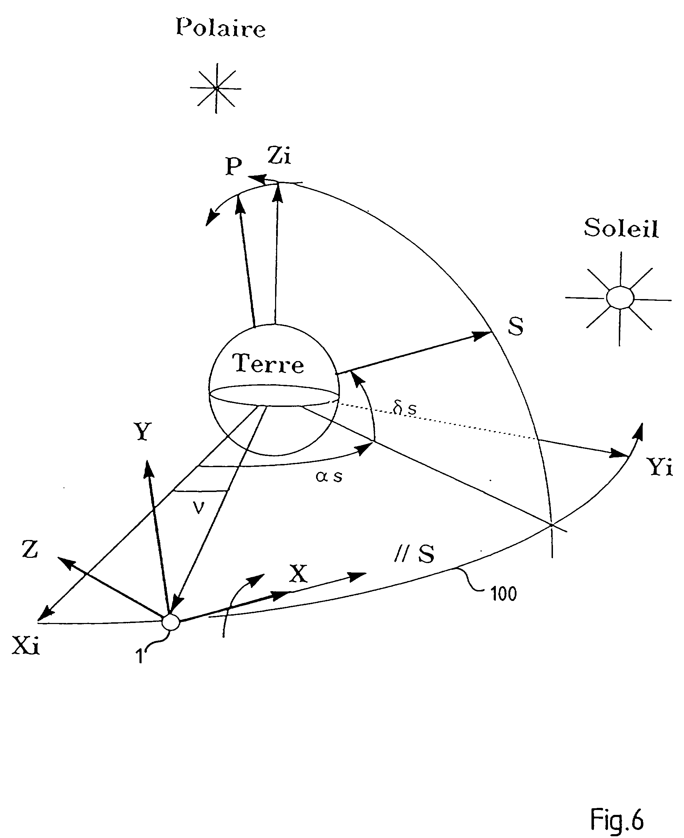

On a déjà vu le rôle du bloc logique 21. Le rôle des autres blocs ressort de l'analyse faite, en regard des figures 6 à 10, des phases successives du procédé d'acquisition de la Terre selon l'invention (même si à chaque phase ne correspond pas nécessairement un sous-mode unique).

Le satellite est d'abord dans une attitude de pointage solaire (figure 6), c'est-à-dire que son axe de roulis X est orienté vers le Soleil (il faut se rappeler que ce n'est que pour les besoins de l'exposé que la représentation du Soleil apparaît sur cette figure et qu'en réalité celle-ci devrait se faire très en dehors de cette figure). Le satellite tourne autour de son axe X temporairement parallèle à la direction S reliant la Terre au Soleil caractérisée par son ascension droite $\alpha s$ et par sa déclinaison $\delta s$. L'orbite 100 est par exemple géosynchrone. L'angle $\nu$ définit la position du satellite sur son orbite, dans le repère inertiel.

L'acquisition (ou la réacquisition si l'attitude de la figure 5 fait suite à un incident) de la Terre, c'est-à-dire le passage à une attitude nominale avec l'axe Z vers la Terre résulte des étapes suivantes :

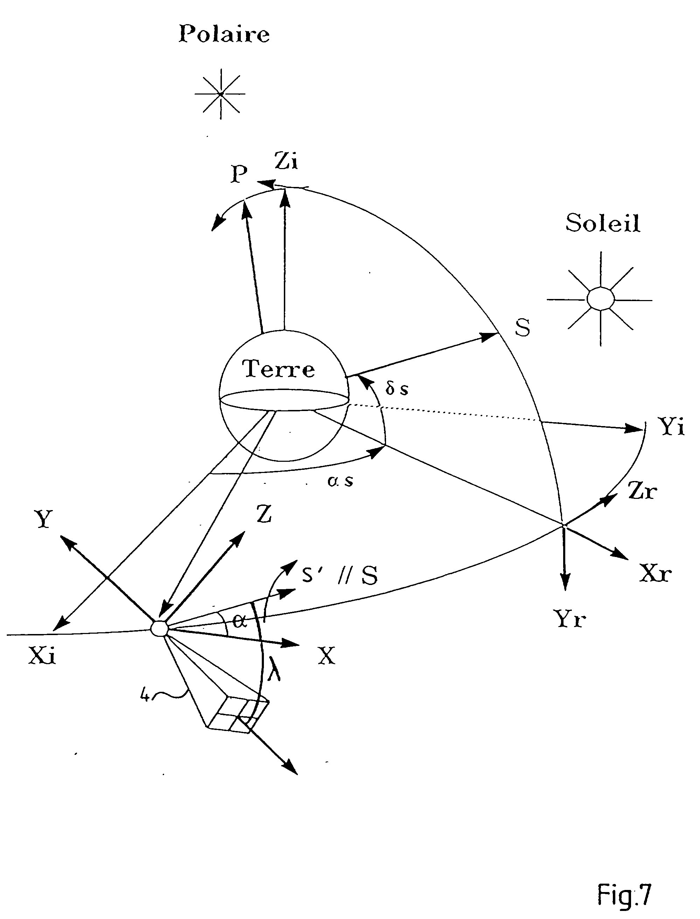

- Etape 1 : recherche de l'Etoile Polaire (figure 7)

On commande l'ensemble d'actionnement en sorte de déplacer, de préférence, dans le plan (X, Y) du satellite, le vecteur S de la direction du Soleil d'un angle $\alpha$ par rapport à sa position initiale sensiblement parallèle à X, cet angle $\alpha$ éventuellement négatif étant choisi en fonction de la date, de préférence au moins approximativement égal mais de signe contraire à la déclinaison du Soleil sur le plan équatorial terrestre. On désigne par S' cette direction dans le repère (X, Y, Z). Cet ensemble d'actionnement est en outre commandé en sorte de maintenir le satellite dans une attitude par rapport au Soleil telle que ce satellite soit soumis à une rotation autour de S' (et non plus autour de X), en utilisant pour ce contrôle d'attitude les signaux provenant du sous-système de détection solaire et de l'ensemble de détection de vitesse angulaire.

Plus généralement, cette direction S' est choisie en sorte de faire avec l'axe optique du détecteur stellaire, donc avec l'axe Y, un angle $\lambda$ satisfaisant la relation :

$$90° - \delta s - Fspx < \lambda < 90° - \delta s + Fspx$$

si $\delta s$ est l'inclinaison du Soleil par rapport à l'Equateur et si Fspx est la demi-amplitude angulaire du champ de vue du système de détection stellaire dans un plan du satellite contenant l'axe optique de ce système de détection stellaire et cette orientation.

Du fait de cet écart $\alpha$ entre S' et X, et de la rotation autour de S', le repère satellite (X, Y, Z) vient se superposer, en des instants régulièrement espacés dans le temps, à un repère (Xr, Yr, Zr) tel que l'axe Xr est suivant la projection du vecteur Soleil sur le plan équatorial terrestre, l'axe Yr est dirigé vers le Sud et l'axe Zr complète le trièdre orthonormé direct. Pour ce contrôle, on calcule les composantes Srx, Sry et Srz du vecteur Soleil dans ce repère (Xr, Yr, Zr) et on les applique à la logique de commande d'attitude afin que cette dernière active les tuyères pour réduire les écarts entre ces composantes et celles Sbx, Sby et Sbz du vecteur Soleil dans le repère satellite XYZ. Typiquement, les composantes Srx, Sry et Srz sont calculées en fonction des angles d'ascension droite $\alpha s$ et de déclinaison $\delta s$ de la direction du Soleil par rapport au repère inertiel géocentrique Xi Yi Zi.

Le choix du décalage angulaire $\alpha$ est tel que lors de la rotation autour de S' le champ de vue du détecteur de Polaire (dirigé suivant -Y) balaie un cône d'angle $\lambda$, donc une couronne de la sphère céleste qui contient obligatoirement la Polaire. Cette étoile est alors détectée chaque fois que le repère satellite arrive au voisinage de la position visée (superposition au repère (Xr, Yr, Zr)) sachant que le champ de vue du détecteur 4 est suffisamment large dans ce mode de recouvrement. On verra toutefois plus loin qu'il n'est pas nécessaire de détecter l'Etoile Polaire pour l'identifier.

En pratique, du fait de l'existence d'un grand nombre d'étoiles susceptibles d'être détectées par le détecteur stellaire, plusieurs d'entre elles sont vues par ce détecteur lors de cette phase de rotation autour du Soleil. Il est donc impératif de pouvoir identifier la Polaire pour que l'on puisse terminer la phase de recherche et passer en mode de capture (étape 2).

La description détaillée de l'algorithme d'identification de la Polaire (bloc 23) sera donnée ci-après mais, pour cette phase de recherche de la Polaire, on retient que cet algorithme fournit au bloc 22, des données d'identification comprenant de préférence au moins les paramètres suivants :

- un indicateur Idp initialement égal à 0 et mis à 1 dès que la Polaire a été identifiée par l'algorithme,
- un angle $\Delta\Phi$p mesurant, à chaque instant et à partir du moment où la Polaire a été reconnue, la phase angulaire de la direction polaire par rapport à l'axe optique du détecteur 4.

Cette première étape correspond à un premier sous-mode (recherche et identification de la Polaire).

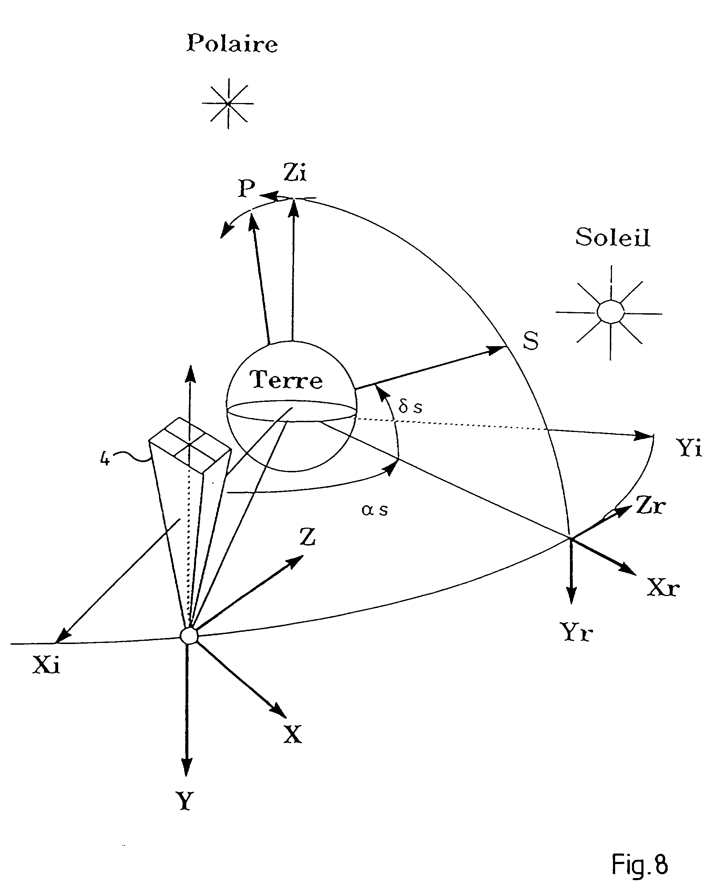

- Etape 2 : freinage de la rotation et capture de la Polaire (figure 8)

Une fois que la Polaire a été identifiée, l'on détermine périodiquement son écart angulaire par rapport à l'axe optique du détecteur 4, puis on procède au freinage de la rotation (donc à une diminution des vitesses angulaires), avec les tuyères et notamment autour de l'axe X, afin que l'étoile entre lentement dans le champ de vue du détecteur.

Cette phase, qui correspond à un deuxième sous-mode, est déclenchée de préférence le plus tard possible, dès que l'angle $\Delta\Phi$p devient inférieur à une valeur $\Delta\Phi$p1 présélectionnée (par exemple $\Delta\Phi$p1=30°).

Ensuite, dès que la phase angulaire de l'étoile - calculée par l'algorithme d'identification - devient inférieure à un seuil angulaire $\Delta\Phi$p2 présélectionné - par exemple $\Delta\Phi$p2 = (demi-champ de vue du détecteur) - on passe automatiquement en phase de capture, ce qui correspond à un troisième sous-mode.

Pour ce faire, on commande les tuyères de manière à maintenir à zéro les sorties du détecteur de Polaire 4 ainsi que les vitesses angulaires du satellite, mesurées par les gyromètres.

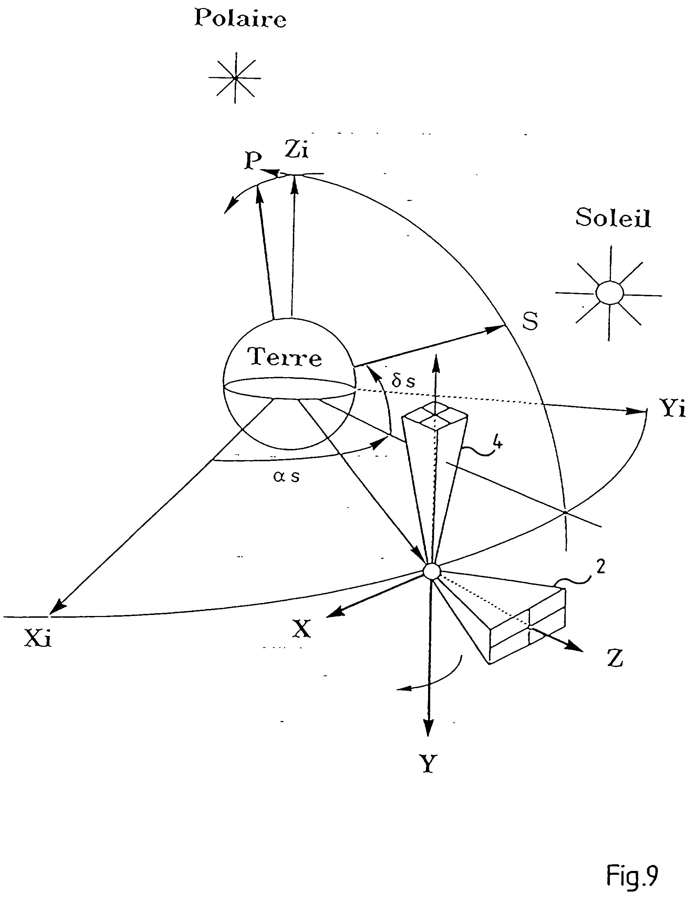

- Etape 3 : recherche de la Terre (figure 9)

Toujours à l'aide des gyromètres et du détecteur de Polaire et soit de manière automatique après un temps $\Delta$t34 compté à partir du début de la phase de capture polaire, soit par télécommande depuis le sol, le satellite est mis en rotation autour de l'axe (-Y) maintenant proche de la direction NORD-SUD et ce afin que le détecteur terrestre puisse rencontrer la Terre.

Dans ce quatrième sous-mode (recherche Terre), la Polaire reste à l'intérieur du champ de vue du détecteur stellaire et le contrôle d'attitude est basé sur les angles de roulis et lacet mesurés par ce détecteur et sur les vitesses angulaires mesurées par les gyromètres, compte tenu de la consigne fixée pour la vitesse autour de l'axe Y (dans le sens positif ou négatif selon l'heure solaire du satellite).

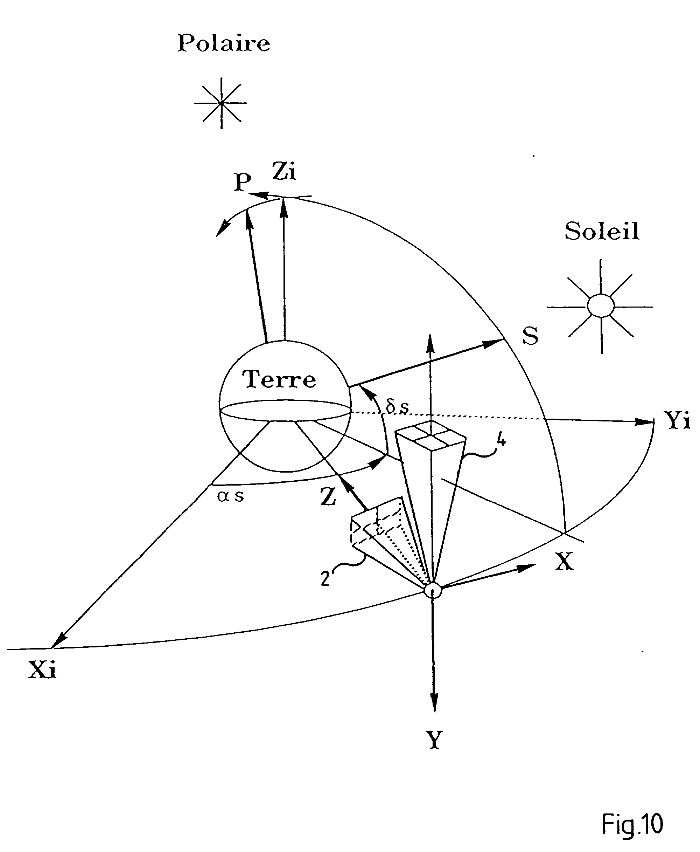

- Etape 4 : Capture de la Terre et pointage final (figure 10)

Dès que la Terre entre dans le champ de vue du détecteur terrestre, les erreurs de roulis et de tangage mesurées par ce détecteur sont utilisées conjointement avec l'information de lacet du détecteur de Polaire et les vitesses angulaires mesurées par les gyromètres afin que le détecteur terrestre puisse capturer la Terre et que le repère satellite (X, Y, Z) se stabilise sur le repère orbital local (Xo, Yo, Zo). Ce cinquième sous-mode (capture Terre) termine alors l'acquisition de la Terre avec l'axe Z pointé vers le centre Terre et l'axe Y dirigé vers le Sud.

Le principe de l'algorithme d'identification de la Polaire peut se définir comme suit : lorsqu'une étoile de magnitude adéquate (typiquement <3) traverse le champ de vue du détecteur 4, ce dernier fournit, avec une fréquence de sortie déterminée (typiquement 1 à 10 Hz), les coordonnées xsp et zsp et l'éclairement de la tâche image créée par l'étoile sur l'organe détecteur du détecteur (barette CCD par exemple).

En particulier, l'estimation de l'instant du prochain passage de l'Etoile Polaire dans le champ de vue du détecteur, dont la connaissance est nécessaire pour déclencher le sous-mode de freinage de la rotation et de capture de l'étoile, est réalisée par un algorithme spécifique qui traite en temps réel les mesures effectuées par les détecteurs solaire, polaire et par les gyromètres.

Le principe de base de cet algorithme consiste à corréler la séquence d'étoiles mesurées par le détecteur stellaire avec une séquence théorique calculée à l'aide d'un catalogue d'étoiles existant au sol, ou de préférence stocké dans le calculateur de bord du satellite.

En fait, l'identification de la Polaire (bloc 23) peut être décomposée en deux fonctions essentielles :

- une fonction de collecte de données ou de prétraitement (bloc 23a de prétraitement et d'analyse des mesures stellaires), activée à chaque cycle de mesure, et permettant de condenser les mesures effectuées pendant le transit des étoiles à travers le champ de vue du détecteur et d'éliminer certaines mesures aberrantes (par exemple, les tâches fixes),
- une fonction d'identification proprement dite (bloc 23b de corrélation des mesures stellaires et d'identification de la Polaire), basée sur le catalogue d'étoiles (bloc 23c) et activée par la fonction de prétraitement lorsque la quantité de mesures disponibles dévient suffisante.

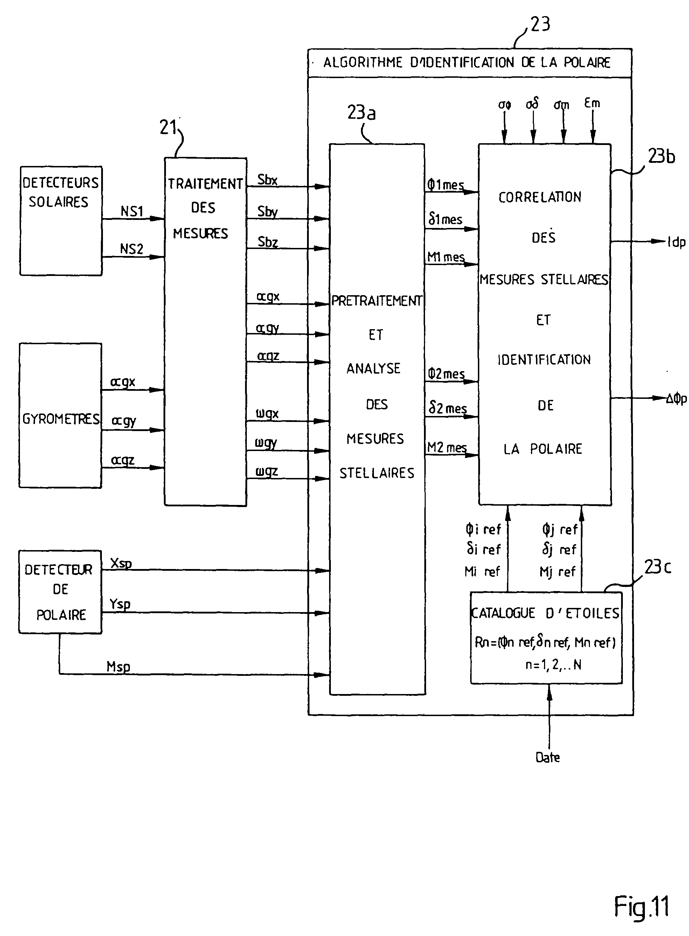

La figure 11 montre le schéma de principe de l'algorithme d'identification de la Polaire, et les paragraphes suivants explicitent les fonctions citées ci-dessus.

Catalogue d'étoiles : ce catalogue est constitué, à partir d'un catalogue plus général de référence -par exemple d'après WERTZ, James, Editor, "Spacecraft Attitude Determination and Control", Reidel Publushing Company, Holland/USA/England, 1986 - par une liste de N étoiles contenant obligatoirement la Polaire et susceptibles d'être vues par le détecteur au cours du balayage de la sphère céleste en rotation autour du Soleil (avec le décalage $\lambda$ de la figure 7).

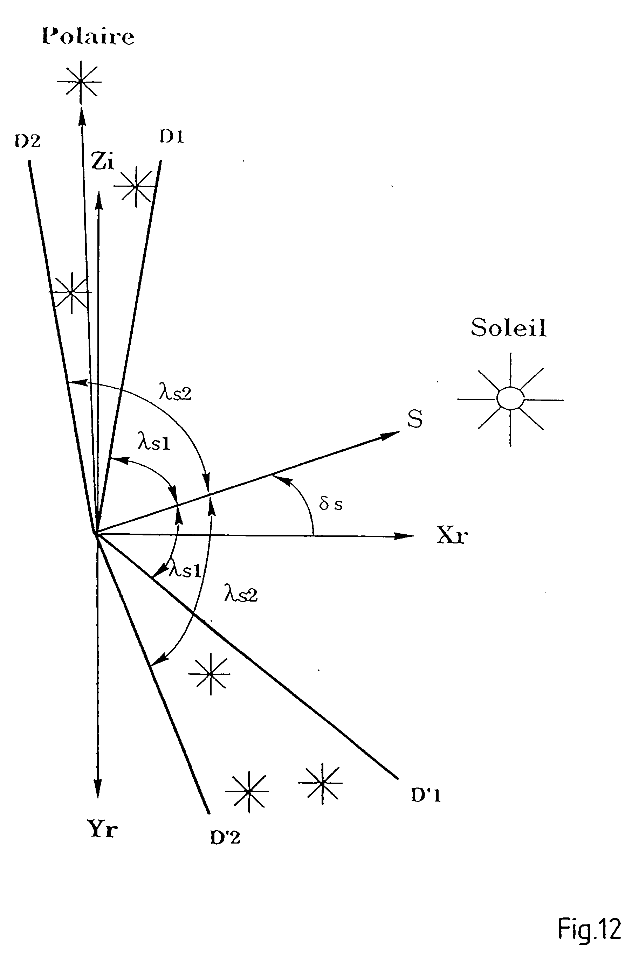

Typiquement, les étoiles-retenues sont celles de la sphère céleste qui sont au moins aussi brillantes que la Polaire et dont la direction E fait avec le vecteur Soleil S un angle égal à (90° - déclinaison du Soleil +/- Fspx) où Fspx désigne le champ de vue du détecteur de Polaire autour de l'axe Xsp parallèle à l'axe X du satellite (voir la figure 12 où $\lambda 1$ et $\lambda 2$ correspondent aux valeurs extrêmes acceptables de $\lambda$). Le nombre d'étoiles N peut aller de 10 à 20 étoiles pour un catalogue embarqué extrêmement réduit à environ 300 étoiles pour un catalogue embarqué relativement détaillé.

Pour chacune de ces étoiles, le catalogue contient typiquement les informations suivantes : magnitude de l'étoile (visuelle par exemple), ascension droite et déclinaison par rapport à un repère inertiel comme par exemple le repère inertiel géocentrique.

Le tableau 1 fournit la liste des 100 étoiles les plus brillantes du ciel classées par ordre de magnitude visuelle croissante, sachant que plus la magnitude augmente moins l'étoile est brillante dans le visible (ces étoiles sont en fait caractérisées ici par leur irradiance). On peut également se référer pour élaborer ce catalogue de travail, à des catalogues d'étoiles tels que ceux de l'université de Yale, du Smithsonian Institute ou de la NASA.

Collecte des données et prétraitement des mesures détecteurs et gyromètres :

A chaque cycle de mesure, le module de prétraitement 23a réalise au moins les opérations suivantes :

1) Acquisition des données issues du détecteur de Polaire et des gyromètres,
2) Mise à jour de l'angle de rotation intégré (amplitude angulaire déjà scrutée) autour du vecteur Soleil, appelé arc d'identification, ainsi que de l'angle de déclinaison de l'étoile détectée par rapport au plan perpendiculaire à l'axe de rotation. Ces angles sont calculés en fonction des vitesses angulaires détectées par les gyromètres et des mesures effectuées par les détecteurs solaires et de polaire,
3) Analyse et condensation des mesures du détecteur de Polaire, dans le but d'éliminer les détections aberrantes ou inexploitables, comme celles induites par des tâches fixes ou par deux étoiles de magnitudes voisines et passant en même dans le champ de vue du détecteur stellaire.

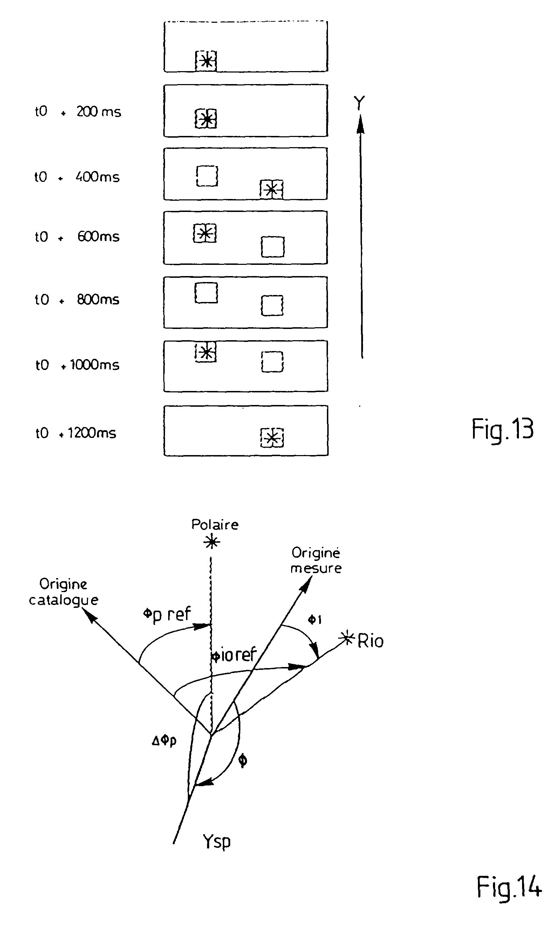

Le principe de cette fonction élémentaire est explicité sur l'exemple typique suivant, dans l'hypothèse d'une période de mesure de 200 ms pour le détecteur stellaire et d'une vitesse de rotation de 0.5 degré/seconde autour de la direction du Soleil (voir figure 13) :

1. A t=to, le détecteur détecte une tâche brillante et délivre ses coordonnées X et Y ainsi que sa magnitude Mv et ces informations sont mémorisées par la logique de prétraitement qui crée un tableau appelé spot contenant la position de l'étoile, le nombre de détections (initialisé à 1) et la moyenne des magnitudes mesurées.
2. A t=to+200 ms, la logique prédit la position de l'étoile 200 ms plus tard, connaissant la vitesse de rotation du satellite. Ainsi, à 0.5 °/s, l'étoile a dû se décaler de 0.1 degré dans la direction Y. La tâche détectée à cet instant étant proche de la position prédite, cette tâche sera attribuée à la même étoile, et le spot correspondant sera mis à jour : recentrage sur la position mesurée, incrémentation du nombre de détection, mise à jour de la moyenne des magnitudes.
3. A t=to+400 ms, la prédiction de la position du spot ne correspond pas à la mesure, la logique crée donc un nouveau spot correspondant à une deuxième étoile.
4. A t=to+600 ms, la tâche détectée correspond de nouveau au premier spot, les caractéristiques de celui-ci sont alors mises à jour comme à t=to+200 ms.
5. A t=to+800 ms, aucune étoile n'est détectée mais la logique continue de prédire la position du spot.
6. A t=to+1000 ms, la tâche détectée correspond à nouveau au premier spot.
7. A t=to+1200 ms, la prédiction de la position du spot 1 est en dehors du champ de vue, l'étoile a dû terminer son transit et la logique effectue le bilan concernant ce spot, en élaborant une mesure M1 à destination de la logique d'identification.
Cette mesure M1 est composée des informations suivantes :

→ la valeur courante du signal gyrométrique intégré : mesure de la position relative ou de l'azimuth de l'étoile (dernière valeur mesurée),
→ l'abscisse du spot, équivalente à l'élévation au-dessus
du plan perpendiculaire à l'axe de rotation,
→ la valeur moyenne des magnitudes sur les N détections.

8. La mesure M1 créée est alors comparée à celles déjà enregistrées de manière à ne conserver en mémoire que les étoiles les plus brillantes, le spot 1 est détruit et la mesure courante est désormais attribuée au spot 2.

En résumé, la fonction de prétraitement des mesures permet de réaliser, au minimum, les opérations suivantes :

- suivre plusieurs étoiles transitant simultanément dans le champ de vue du détecteur stellaire,
- éliminer les tâches fixes, erratiques (cas to+400ms) ou animées d'une vitesse de défilement ne correspondant pas à la vitesse réelle de rotation du satellite,
- moyenner les mesures de magnitude et limiter l'impact du bruit du détecteur.

Identification de la Polaire :

La fonction d'identification est activée dès qu'au moins deux étoiles ont été détectées et classées par la fonction de collecte de données et que le satellite a parcouru dans son mouvement de rotation un angle (ou un arc) minimum $\Phi$min (typiquement, 90°)

L'identification de la Polaire est alors réalisée en calculant la distance pondérée $\Delta$ij du couple (M1, M2) d'étoiles mesurées les plus brillantes par la logique de prétraitement à un couple quelconque (Ri, Rj) - 1<i<N et 1<j<N - d'étoiles du catalogue de référence.

Typiquement, la distance pondérée $\Delta$ij s'exprime simplement en fonction des caractéristiques des étoiles mesurées et des étoiles de référence par la formule : $\Delta ij = [(\Phi 1mes - \Phi 2mes) - (\Phi iref - \Phi jref)]^2 / (\sigma\Phi)^2 + [(\delta 1mes - \delta iref)^2 / (\sigma\delta)^2 + [\delta 2mes - \delta jref)^2 / (\sigma\delta)^2 + [M1mes - Miref]^2 / (\sigma m)^2 + [(M2mes - Mjref)^2 / (\sigma m)^2$ avec :

- $(\Phi 1mes - \Phi 2mes)$ la différence d'azimuth des étoiles mesurées, calculée d'après les mesures gyrométriques,
- $(\Phi iref - \Phi jref)$ la différence d'azimuth des étoiles Ri, Rj du catalogue,
- $\delta 1mes$, $\delta 2mes$ les élévations au-dessus du plan orthogonal à l'axe Xsp,
- $\delta iref$, $\delta jref$ les élévations au dessus du plan perpendiculaire à l'axe de rotation des étoiles Ri, Rj du catalogue,
- M1mes, M2mes les magnitudes des étoiles mesurées,
- Miref, Mjref les magnitudes des étoiles de référence Ri, Rj,
- $\sigma\Phi$ l'écart type estimé de l'incertitude sur la mesure de la différence d'azimuth,
- $\sigma\delta$ l'écart-type estimé de l'incertitude sur la mesure de l'élévation,
- $\sigma m$ l'écart-type estimé de l'incertitude sur la mesure de la magnitude.

En l'absence d'erreurs de mesure et de disposition ambiguë d'étoile, la distance $\Delta$ij est nulle (ou proche de zéro) pour le couple io, jo tel que Rio=M1 et Rjo=M2. En présence d'erreur de mesure, la distance $\Delta$ij n'est pas nulle et il faudra comparer $\Delta$ij à un seuil de tolérance présélectionné $\varepsilon$m.

Lorsque le décalage angulaire entre la séquence d'étoiles mesurées et la séquence d'étoiles de référence contenant la Polaire est identifié, on peut alors mettre à 1 le flag d'identification de la Polaire Idp et, à partir de cet instant, calculer l'angle $\Delta\Phi$p (ou l'arc) restant à parcourir jusqu'au passage prochain de la Polaire dans le champ de vue du détecteur, à l'aide de la relation (voir la figure 14) :

$$\Delta\Phi p = 360° - \Phi - (\Phi io\ ref - \Phi p\ ref) - \Phi 1$$

où :

- $\Phi$ est l'arc d'identification courant,
- $\Phi io\ ref$ est l'azimuth catalogué de l'Etoile Ri0,
- $\Phi p\ ref$ est l'azimuth catalogué de l'Etoile Polaire,
- $\Phi 1$ est l'azimuth mesuré de l'étoile M1.

On notera le très faible temps nécessaire à l'identification de la Polaire puisque notamment la collecte de données se fait sur une fraction de tour, sachant qu'un tour dure typiquement de 180 s à 720 s pour des vitesses de rotation allant de 2 degrés/sec à 0,5 degré/sec.

La logique de commande d'attitude 24 est composée essentiellement (voir ci-dessus) de régulateurs linéaires classiques, du type proportionnelle-dérivée ou proportionnel-intégral-dérivé (PID) associés à un ensemble de limiteurs (référence 25), de filtres 26 et de modulateurs 27 non-linéaires, et d'une logique 28 de sélection des tuyères pour la génération de couples suivant les trois axes.

Les régulateurs déterminent des couples de commande linéaire élaborés en fonction des signaux SM de sélection de sous-mode issus du bloc 22 et en se basant sur des gains en position (Kpx, Kpy, Kpz) et en vitesse (Kdx, Kdy, Kdz) ainsi que sur les paramètres d'entrée suivants, provenant du bloc 21 :

- les composantes Sbx, Sby, Sbz du vecteur Soleil dans les axes satellite (mesurées par les détecteurs solaires), ainsi que les composantes Srx, Sry, Srz du vecteur Soleil dans le repère de référence (déterminées par la logique 22 d'enchaînement des modes),
- les angles d'attitude en roulis $\Phi$sp et lacet $\Psi$sp mesurés par le détecteur de Polaire,
- l'angle de tangage $\Theta$st mesuré par le détecteur de Terre,
- les vitesses angulaires $\omega$gx, $\omega$gy et $\omega$gz mesurées par les gyromètres sur les trois axes,
- les consignes de vitesse de rotation correspondant à chacun des sous-modes : vitesse de recherche Polaire $\omega$rp, vitesse de capture Polaire $\omega$cp et vitesse de recherche Terre $\omega$rt.

En outre et dans le but d'éviter la saturation des commandes, on associe à ces régulateurs un ensemble de limiteurs ou de logiques simples linéaires autour de zéro et ayant des niveaux de saturation, en position (Lpx, Lpy, Lpz) et en vitesse (Ldx, Ldy, Ldz) présélectionnés.

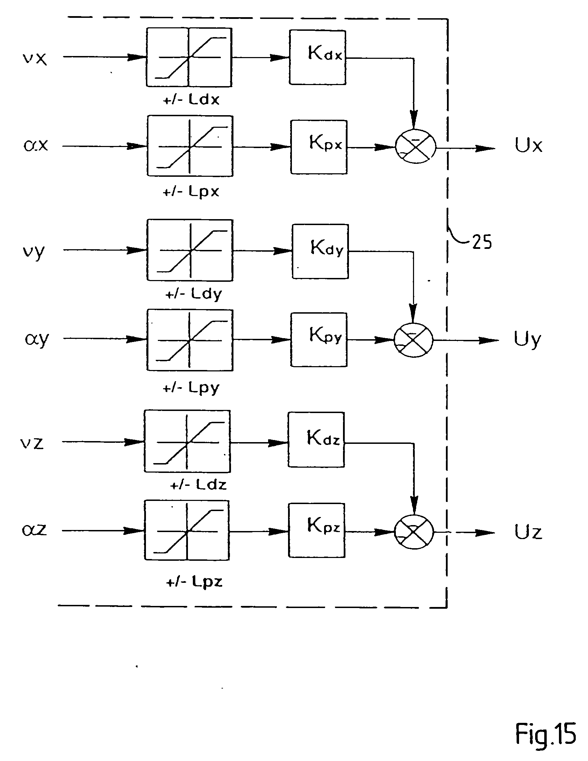

La figure 15 montre la structure typique des limiteurs et régulateurs linéaires et le tableau 2 détermine les traitements numériques préalables élaborant, au sein du bloc 24, les signaux d'entrée de ces régulateurs, pour les différentes étapes de recherche et capture Polaire et de recherche et capture Terre.

Les filtres, de préférence digitaux et de type classique (second ordre par exemple), ont pour rôle de réduire les effets parasites dûs, entre autres, aux bruits des détecteurs et de filtrer les effets induites par les éléments flexibles (notamment ailes du générateur solaire et antennes).

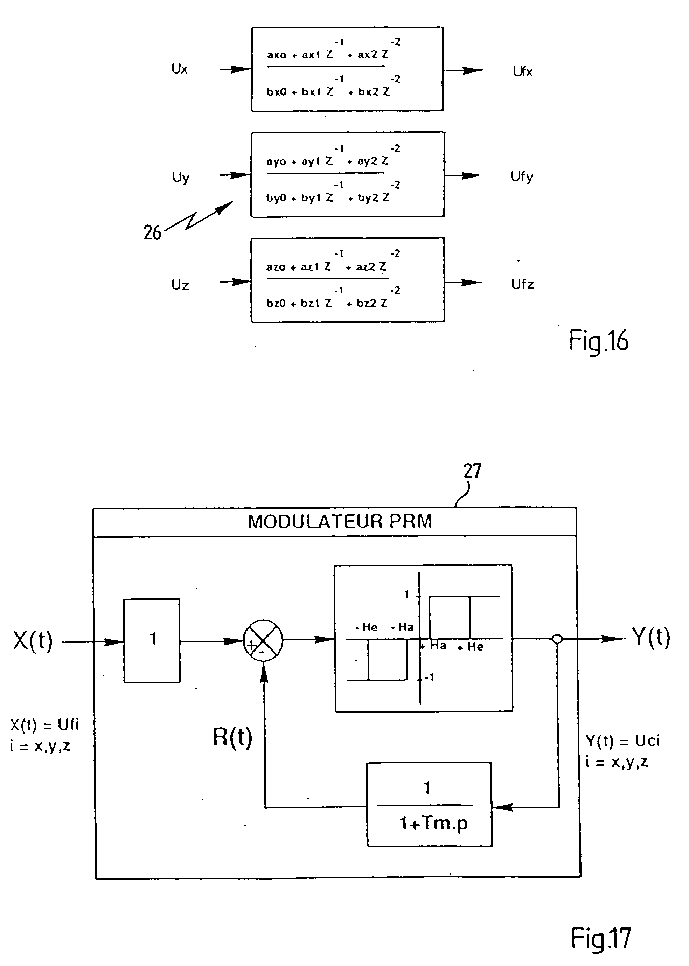

La figure 16 montre le schéma fonctionnel typique d'un filtre digital du second ordre avec indication de la formule discrète correspondante peut s'écrire :

$$Ufi(n) = [-bi1*Ufi(n-1) - bi2*Ufi(n-2)$$
$$+ai0*Ui(n) + ai1*Ui(n-1)$$
$$+ai2*Ui(n-2)]/bio$$

avec i = x, y ou z

Les modulateurs sont des organes non-linéaires définis généralement par une structure de système asservi comprenant typiquement une logique non linéaire à saturation et hystérésis (avec des paramètres He et Ha) et un filtre linéaire du premier ordre (avec la constante de temps Tm).

Ces modulateurs transforment des niveaux d'entrée continus en séries d'impulsions équivalentes, de niveau égal à 0, +1 ou -1, multiplié si nécessaire par un facteur d'échelle.

La figure 17 montre la structure d'un modulateur classique du type PRM (Pseudo-Rate Modulator) avec un facteur d'échelle en sortie égal à 1.

Enfin, le bloc de sélection tuyères est une structure logique, câblée ou non, qui permet d'activer les tuyères, notées par exemple 2A, 3A, 4A, 5A, 6A, 7A pour la branche A et 2B, 3B, 4B, 5B, 6B, 7B pour une branche redondante B, de manière à réaliser les couples de commande d'attitude commandés suivant l'un ou l'autre des trois axes du satellite.

Les deux paragraphes suivants précisent des règles typiques de sélection des tuyères, d'abord dans le cas idéal où les tuyères génèrent des couples purs autour des trois axes, puis dans le cas pratique où, par exemple, les tuyères de tangage et de lacet sont couplées.

- <u>Tuyères sans couplage (couples purs)</u>

Ucx > 0 →     activer tuyère 6A ou 6B
Ucx < 0 →     activer tuyère 7A ou 7B
Ucy > 0 →     activer tuyère 2A ou 2B
Ucy < 0 →     activer tuyère 3A ou 3B
Ucz > 0 →     activer tuyère 4A ou 4B
Ucz < 0 →     activer tuyère 5A ou 5B

- <u>Tuyères avec couplage tangage/lacet</u>

Ucx > 0 →     activer tuyère 6A ou 6B
Ucx < 0 →     activer tuyère 7A ou 7B

Ucy > 0 →    activer tuyères 3A et 4A ou bien activer tuyères 3B et 4B
Ucy < 0 →    activer tuyères 2A et SA ou bien activer tuyères 2B et 5B
Ucz > 0 →    activer tuyères 2A et 4A ou bien activer tuyères 2B et 4B
Ucz < 0 →    activer tuyères 3A et 5A ou bien activer tuyères 3B et 5B

TABLEAU   1

| | ETOILE | IRRADIANCE x $10^{-13}$ W/cm$^2$ | ASCENSION DROITE (degré) | DECLINAISON (degré) |
|---|---|---|---|---|
| 1 | SIRIUS | 49.00 | 100.93 | -16.67 |
| 2 | CANOPUS | 20.00 | 95.81 | -52.68 |
| 3 | VEGA | 10.50 | 278.96 | 38.75 |
| 4 | RIGEL | 9.00 | 78.25 | - 8.24 |
| 5 | ACHERNAR | 8.00 | 24.13 | -57.40 |
| 6 | HADAR | 6.80 | 210.39 | -60.22 |
| 7 | RIGIL KENTAURUS | 6.60 | 219.35 | -60.70 |
| 8 | ACRUX | 6.10 | 186.20 | -62.92 |
| 9 | CAPELLA | 5.60 | 78.58 | 45.97 |
| 10 | ARCTURUS | 5.30 | 213.55 | 19.35 |
| 11 | PROCYON | 5.10 | 114.41 | 5.31 |
| 12 | SPICA | 5.00 | 200.88 | -11.00 |
| 13 | ALTAIR | 4.30 | 297.31 | 8.78 |
| 14 | MIMOSA | 4.00 | 191.46 | -59.51 |
| 15 | REGULUS | 3.80 | 151.67 | 12.12 |
| 16 | ADHARA | 3.50 | 104.34 | -28.93 |
| 17 | DENEB | 3.30 | 310.08 | 45.17 |
| 18 | ALNILAM | 3.30 | 83.65 | - 1.22 |
| 19 | SHAULA | 3.30 | 262.86 | -37.08 |
| 20 | BELLATRIX | 3.20 | 80.85 | 6.32 |
| 21 | FORMALHAUT | 3.10 | 343.97 | -29.79 |
| 22 | CASTOR | 2.60 | 113.14 | 31.96 |
| 23 | ALKAID | 2.50 | 206.57 | 49.47 |
| 24 | ALNITAK | 2.50 | 84.79 | - 1.96 |
| 25 | ELNATH | 2.40 | 81.07 | 28.58 |
| 26 | ALIOTH | 2.40 | 193.16 | 56.13 |
| 27 | MURZIM | 2.40 | 95.32 | -17.94 |
| 28 | ALDEBARAN | 2.30 | 68.52 | 16.45 |
| 29 | POLLUX | 2.30 | 115.84 | 28.11 |
| 30 | MIAPLACIDUS | 2.20 | 138.21 | -69.59 |
| 31 | GAMMA VELA | 2.20 | 122.14 | -47.24 |
| 32 | CIH | 2.20 | 13.69 | 60.54 |
| 33 | BETELGEUSE | 2.10 | 88.36 | 7.40 |
| 34 | SAIPH | 2.10 | 86.56 | - 9.68 |
| 35 | NUNKI | 2.10 | 283.32 | -26.34 |
| 36 | KAUS AUSTRALIS | 2.00 | 275.51 | -34.40 |
| 37 | ALHENA | 2.00 | 98.97 | 16.43 |
| 38 | PEACOCK | 2.00 | 305.78 | -56.84 |
| 39 | NAOS | 1.90 | 120.61 | -39.91 |
| 40 | AL NAIR | 1.80 | 331.56 | -47.12 |
| 41 | DELTA VELA | 1.80 | 130.96 | -54.59 |
| 42 | ANTARES | 1.70 | 246.86 | -26.36 |

TABLEAU 1 (suite)

| ETOILE | IRRADIANCE $\times 10^{-13}$ W/cm$^2$ | ASCENSION DROITE (degré) | DECLINAISON (degré) |
|---|---|---|---|
| 43 ALPHERATZ | 1.70 | 1.68 | 28.91 |
| 44 MENKALIMAN | 1.60 | 89.30 | 44.95 |
| 45 MINTAKA | 1.60 | 82.59 | .32 |
| 46 DZUBA | 1.60 | 239.61 | -22.53 |
| 47 KAPPA SCORPIO | 1.50 | 265.07 | -39.02 |
| 48 ALUDRA | 1.50 | 110.71 | -29.24 |
| 49 MIRFAK | 1.40 | 50.51 | 49.75 |
| 50 THETA SCORPIO | 1.40 | 263.75 | -42.98 |
| 51 MIZAR | 1.40 | 200.66 | 55.09 |
| 52 E CENTAURUS | 1.40 | 204.46 | -53.30 |
| 53 H CENTAURUS | 1.40 | 218.37 | -42.02 |
| 54 KAPPA VELA | 1.40 | 140.28 | -54.87 |
| 55 AVIOR | 1.30 | 125.46 | -59.41 |
| 56 DENEBOLA | 1.30 | 176.86 | 14.75 |
| 57 MUHLIFAIN | 1.30 | 189.94 | -48.78 |
| 58 ALPHECCA | 1.30 | 233.33 | 26.82 |
| 59 Z OPHIUCHUS | 1.30 | 248.85 | -10.50 |
| 60 GACRUX | 1.20 | 187.34 | -56.93 |
| 61 WEZEN | 1.20 | 106.77 | -26.34 |
| 62 MERAK | 1.20 | 164.98 | 56.55 |
| 63 ACRAB | 1.20 | 240.89 | -19.72 |
| 64 DUBHE | 1.10 | 165.44 | 61.92 |
| 65 ATRIA | 1.10 | 251.32 | -68.97 |
| 66 POLARIS | 1.10 | 30.43 | 89.12 |
| 67 SCUTULUM | 1.10 | 137.64 | -62.19 |
| 68 ALPHA LUPUS | 1.10 | 219.95 | -47.25 |
| 69 PHECDA | 1.10 | 178.04 | 53.87 |
| 70 MARKAB | 1.10 | 345.79 | 15.03 |
| 71 BETA LUPUS | 1.10 | 224.11 | -43.01 |
| 72 U SCORPIO | 1.10 | 262.15 | -37.27 |
| 73 TAU SCORPIO | 1.10 | 248.47 | -28.15 |
| 74 RASALHAGUE | 1.00 | 263.36 | 12.58 |
| 75 DELTA CENTAURUS | 1.00 | 181.67 | -50.54 |
| 76 ZUBENESCH | 1.00 | 228.82 | - 9.27 |
| 77 THETA AURIGA | 1.00 | 89.38 | 37.21 |
| 78 ZETA PERSEUS | 1.00 | 58.03 | 31.79 |
| 79 ALGENIB | 1.00 | 2.90 | 15.01 |
| 80 SABIK | .98 | 257.14 | -15.69 |
| 81 THETA CARINA | .97 | 160.45 | -64.23 |
| 82 EPSILON PERSEUS | .97 | 58.93 | 39.92 |
| 83 PHI SCORPIO | .97 | 239.23 | -26.02 |
| 84 ZETA TAURUS | .96 | 83.93 | 21.12 |

Tableau 1 (fin)

| ETOILE | IRRADIANCE x $10^{-13}$ W/cm$^2$ | ASCENSION DROITE (degré) | DECLINAISON (degré) |
|---|---|---|---|
| 85 CAPH | .95 | 1.86 | 58.97 |
| 86 GEINAH | .95 | 183.54 | −17.36 |
| 87 GAMMA LUPUS | .95 | 233.25 | −41.06 |
| 88 Z SAGITTARIUS | .94 | 285.14 | −29.93 |
| 89 PHACT | .93 | 84.62 | −34.09 |
| 90 ZOSCA | .92 | 168.10 | 20.70 |
| 91 ALPHA ARA | .92 | 262.34 | −49.85 |
| 92 SIGMA SCORPIO | .90 | 244.81 | −25.52 |
| 93 ZETA CENTAURUS | .89 | 208.38 | −47.13 |
| 94 SADIR | .88 | 305.27 | 40.15 |
| 95 ALDERAMIN | .88 | 319.45 | 62.45 |
| 96 MU SCORPIO | .88 | 252.42 | −37.99 |
| 97 DELTA CRUX | .85 | 183.36 | −58.57 |
| 98 Z CANIS MAJOR | .85 | 94.77 | −30.05 |
| 99 DIPHDA | .83 | 10.50 | −18.16 |
| 100 A CN VN CAROLI | .82 | 193.63 | 38.49 |

TABLEAU 2

| ETAPE | ERREURS DE POSITION | ERREURS DE VITESSE |
|---|---|---|
| RECHERCHE POLAIRE ET FREINAGE ($\Omega = \omega rp; \omega cp$) | $\alpha x = SRz*SBy - SRy*SBz$ <br> $\alpha y = SRx*SBz - SRz*SBx$ <br> $\alpha z = SRy*SBx - SRx*SBy$ | $vx = \omega gx - \Omega*SBx$ <br> $vy = \omega gy - \Omega*SBy$ <br> $vz = \omega gz - \Omega*SBz$ |
| CAPTURE POLAIRE | $\alpha x = \Phi sp$ <br> $\alpha y = 0$ <br> $\alpha z = \Psi sp$ | $vx = \omega gx$ <br> $vy = \omega gy$ <br> $vz = \omega gz$ |
| RECHERCHE TERRE | $\alpha x = \Phi sp$ <br> $\alpha y = 0$ <br> $\alpha z = \Psi sp$ | $vx = \omega gx$ <br> $vy = \omega gy - \omega rt$ <br> $vz = \omega gz$ |
| CAPTURE TERRE | $\alpha x = \Phi st$ <br> $\alpha y = \Theta st$ <br> $\alpha z = \Psi sp$ | $vx = \omega gx$ <br> $vy = \omega gy$ <br> $vx = \omega gz$ |

**Revendications**

1. Procédé pour l'acquisition de la Terre par un satellite circulant sur une orbite terrestre d'inclinaison inférieure à 10° par rapport à l'Equateur, destiné à être stabilisé en attitude autour d'axes de roulis, de tangage et de lacet et comportant un système de détection terrestre 2-axes (2) ayant un axe optique (Zst) destiné à être pointé vers la Terre sensiblement parallèlement à l'axe de lacet, un système de détection stellaire 2-axes (4) ayant un axe optique (Ysp) destiné à être pointé vers l'Etoile Polaire sensiblement parallèlement à l'axe de tangage, un système de détection solaire comportant un sous-système de détection solaire 2-axes (3) ayant un axe optique (Xss) sensiblement orthogonal à l'axe optique du système de détection stellaire et transversal à l'axe optique du système de détection terrestre, selon lequel on part d'une attitude de pointage solaire dans laquelle l'axe optique du sous-système de détection solaire est pointé vers le Soleil, caractérisé en ce que :

   - on commande un déplacement angulaire du satellite en sorte d'amener la direction du Soleil dans une orientation (S') faisant, dans le champ de vue du sous-système de détection solaire (3), un angle $\lambda$ différent de 90° par rapport à l'axe optique du système de détection stellaire (4), cet angle $\lambda$ satisfaisant la relation
     $$90° - \delta s - Fspx < \lambda < 90° - \delta s + Fspx$$
     si $\delta s$ est l'inclinaison du Soleil par rapport à l'Equateur et si Fspx est la demi-amplitude angulaire du champ de vue du système de détection stellaire (4) dans un plan du satellite contenant l'axe optique de ce système de détection stellaire et cette orientation (S'),
   - on provoque une rotation du satellite autour de ladite orientation (S') en sorte de faire décrire à l'axe optique du système de détection stellaire une portion de cône d'axe dirigé vers le Soleil et de demi-angle au sommet égal à $\lambda$,
   - on détecte un groupe d'au moins deux étoiles et on le compare aux étoiles contenues dans un catalogue préétabli en fonction de $\lambda$ recensant les étoiles, dont l'Etoile Polaire, susceptibles d'être détectées lors de ladite rotation autour de ladite orientation, on identifie lesdites étoiles dudit groupe, et on prédit l'instant où l'axe optique du système de détection stellaire sera sensiblement pointé vers l'Etoile Polaire,
   - on freine ladite rotation avant cet instant puis on capture l'Etoile Polaire dans l'axe optique du système de détection stellaire,
   - on fait tourner le satellite autour de l'axe optique du système de détection stellaire jusqu'à la détection de la Terre par le système de détection terrestre, et on capture la Terre dans l'axe optique de ce système de détection terrestre.

2. Procédé selon la revendication 1, caractérisé en ce que l'axe optique dudit sous-système de détection solaire est parallèle à l'axe de roulis.

3. Procédé selon la revendication 1 ou la revendication 2, caractérisé en ce que ladite orientation de la direction du Soleil dans le champ de vue du sous-système de détection solaire est sensiblement coplanaire aux axes optiques dudit sous-système de détection solaire et du système de détection stellaire.

**4.** Procédé selon l'une quelconque des revendications 1 à 3, caractérisé en ce que, lors de la rotation autour de ladite orientation, on relève pour chaque étoile du groupe, ses coordonnées dans le champ de vue du système de détection stellaire, et on compare la distance entre deux des étoiles du groupe, à la distance prédite par le catalogue pour chaque couple d'étoiles en faisant partie et on identifie lesdites deux étoiles du groupe au couple d'étoile du catalogue ayant cette même distance, à un écart prédéterminé près.

**5.** Procédé selon la revendication 4, caractérisé en ce qu'on mesure en outre pour chaque étoile une grandeur représentative de sa brillance et les deux étoiles entre lesquelles on mesure la distance sont les deux étoiles du groupe qui sont les plus brillantes.

**6.** Procédé selon l'une quelconque des revendications 1 à 5, caractérisé en ce que ledit catalogue contient entre 10 et 300 étoiles caractérisées par leur magnitude, leur ascension droite et leur déclinaison par rapport à un repère inertiel de référence.

**7.** Procédé selon l'une quelconque des revendications 1 à 6, caractérisé en ce qu'on détecte ledit groupe d'étoile au cours d'une course de rotation autour de ladite orientation ayant une amplitude angulaire au plus égale à 180°.

**8.** Dispositif pour l'acquisition de la Terre, à partir d'un mode pointé Soleil, par un satellite circulant sur une orbite terrestre d'inclinaison inférieure à 10° par rapport à l'Equateur, destiné à être stabilisé en attitude autour d'axes de roulis, de tangage et de lacet et comportant un système de détection terrestre 2-axes (2) ayant un axe optique (Zst) destiné à être pointé vers la Terre sensiblement parallèlement à l'axe de -lacet, un système de détection stellaire 2-axes (4) ayant un axe optique (Ysp) destiné à être pointé vers l'Etoile Polaire sensiblement parallèlement à l'axe de tangage, un système de détection solaire comportant un sous-système de détection solaire 2-axes (3) ayant un axe optique (Xss) sensiblement orthogonal à l'axe optique du système de détection stellaire et transversal à l'axe optique du système de détection terrestre, un ensemble de détection de vitesses angulaires (5) adapté à donner des mesures de vitesse autour de trois axes, un ensemble d'actionnement (6) destiné à générer des couples de commande sur le satellite et un ensemble de traitement (7) connecté entre les systèmes de détection et l'ensemble de détection de vitesses angulaires et l'ensemble d'actionnement et adapté à générer des ordres de commande pour cet ensemble d'actionnement à partir de signaux de mesure fournis par ces systèmes de détection et cet ensemble de détection de vitesses angulaires, ce dispositif étant contenu dans l'ensemble de traitement et caractérisé en ce qu'il comporte :

- un bloc logique de traitement des mesures (21) adapté à déterminer à partir de ces signaux de mesure des coordonnées dans le repère des axes de roulis, tangage et lacet de la direction du Soleil et de la vitesse instantanée du satellite ainsi que des angles de roulis, tangage et lacet,
- un bloc logique d'identification de la Polaire (23) adapté, à partir des signaux de mesure du système de détection stellaire et des coordonnées et angles fournis par le bloc logique de traitement de mesures (21), à identifier des étoiles détectées par le système de détection stellaire à des étoiles contenues dans un catalogue, à prévoir la venue de l'Etoile Polaire dans ce système de détection stellaire, et à générer des données d'identification,
- un bloc d'enchaînement de sous-modes d'acquisition (22) adapté à générer, à partir des coordonnées et angles fournis par le bloc logique de traitement de mesures et des données d'identification fournies par le bloc logique d'identification de la Polaire, des signaux (SM) de sélection de sous-mode d'acquisition, et
- un bloc logique de commande d'attitude adapté à générer, à partir des signaux de sélection de sous-mode d'acquisition et des coordonnées et angle fournis par le bloc logique de traitement de mesures, des signaux de commande appliqués à l'ensemble d'actionnement élaborés en sorte :

    * dans un premier sous-mode, de faire balayer à l'axe optique du système de détection stellaire une portion de cône autour de la direction du Soleil ayant un demi-angle au sommet au moins approximativement égal à l'écart angulaire entre les direction respectives du Soleil et de l'Etoile Polaire,
    * dans un second sous-mode, de freiner la rotation du satellite,
    * dans un troisième sous-mode, de capturer la Polaire dans le système de détection stellaire,
    * dans un quatrième sous-mode de faire tourner en tangage le satellite en maintenant la Polaire capturée,
    * dans un cinquième sous-mode, de capturer la Terre dans le système de détection terrestre.

**9.** Dispositif selon la revendication 8, caractérisé en ce que les données d'identification générées par le bloc logique d'identification de la Polaire contiennent un signal binaire (Idp) changeant de niveau lorsque l'Etoile Polaire est identifiée et un signal angulaire ($\Delta\Phi p$), représentant l'écart angulaire entre la direction polaire et l'axe optique du système de détection stellaire.

10. Dispositif selon la revendication 8 ou 9, caractérisé en ce que le bloc logique de commande d'attitude comporte un ensemble (25) de régulateurs et de limiteurs propres à chaque sous-mode.

11. Dispositif selon la revendication 10, caractérisé en ce que les régulateurs sont linéaires.

12. Dispositif selon la revendication 10 ou la revendication 11, caractérisé en ce que le bloc logique de commande d'attitude comporte des filtres à la sortie de l'ensemble de régulateurs et de limiteurs.

13. Dispositif selon la revendication 12, caractérisé en ce que les filtres sont de type digital du second ordre.

14. Dispositif selon la revendication 12 ou la revendication 13, caractérisé en ce que le bloc logique de commande d'attitude comporte des modulateurs à la sortie des filtres.

15. Dispositif selon la revendication 14, caractérisé en ce que les modulateurs sont de type PRM, c'est-à-dire "Pseudo-Rate Modulator".

16. Dispositif selon l'une quelconque des revendications 8 à 15, caractérisé en ce que l'ensemble d'actionnement comporte des tuyères (6) et le bloc logique de commande d'attitude comporte une logique (28) de sélection de tuyères.

17. Dispositif selon la revendication 16, caractérisé en ce que la logique de sélection de tuyères est câblée ou implantée dans une mémoire embarquée faisant partie d'un calculateur de bord.


**Patentansprüche**

1. Verfahren zur Erdaquisition durch einen Satelliten, der auf einem Erdorbit mit einer Neigung von weniger als 10° bezüglich des Äquators umläuft, der dazu bestimmt ist, um Roll-, Nick- und Gierachsen herum lagestabilisiert zu werden, und der ein zweiachsiges Erderfassungssystem (2), das eine optische Achse (Zst) hat, die dazu bestimmt ist, im wesentlichen parallel zur Gierachse zur Erde hin ausgerichtet zu werden, ein zweiachsiges Sternerfassungssystem (4), das eine optische Achse (Ysp) hat, die dazu bestimmt ist, im wesentlichen parallel zur Nickachse zum Polarstern hin ausgerichtet zu werden, und ein Sonnenrfassungssystem aufweist, das ein zweiachsiges Sonnenerfassungs-Untersystem (3) aufweist, das eine zur optischen Achse des Sternerfassungssystems im wesentlichen rechtwinklige und quer zur optischen Achse des Erderfassungssystems quer angeordnete optische Achse (Xss) hat, gemäß welchem von einer Sonnenrichtlage ausgegangen wird, in der die optische Achse des Sonnenerfassungs-Untersystems zur Sonne hin ausgerichtet ist, dadurch gekennzeichnet, daß: - eine Winkelbewegung des Satelliten derart bewirkt wird, daß die Sonnenrichtung in eine Ausrichtung (S') gebracht wird, die im Gesichtsfeld des Sonnenerfassungs-Untersystems (3) einen von 90° abweichenden Winkel $\lambda$ bezüglich der optischen Achse des Sternerfassungssystems (4) bildet, wobei dieser Winkel $\lambda$ die Gleichung

$$90° - \delta s - Fspx < \lambda < 90° - \delta s + Fspx$$

erfüllt, wenn $\delta s$ die Neigung der Sonne bezüglich des Äquators ist und wenn Fspx die halbe Winkelamplitude des Gesichtsfeldes des Sternerfassungssystems (4) in einer Ebene des Satelliten ist, die die optische Achse dieses Sternerfassungssystems und diese Ausrichtung (S') enthält,

- eine Drehung des Satelliten um diese Ausrichtung (S') derart bewirkt wird, daß die optische Achse des Sternerfassungssystems einen Kegelabschnitt mit zur Sonne hin ausgerichteter Achse und mit einem Spitzenhalbwinkel gleich $\lambda$ beschreibt,
- eine Gruppe von mindestens zwei Sternen erfaßt wird, die mit den Sternen verglichen wird, die in einer zuvor in Abhängigkeit von $\lambda$ erstellten Liste enthalten sind, die die Sterne, darunter den Polarstern, umfaßt, die bei dieser Drehung um diese Ausrichtung herum erfaßt werden können, diese Sterne dieser Gruppe identifiziert werden und der Zeitpunkt vorhergesagt wird, zu dem die optische Achse des Sternerfassungssystems im wesentlichen zum Polarstern hin ausgerichtet sein wird,
- diese Drehung vor diesem Zeitpunkt gebremst wird und dann den Polarstern in der optischen Achse des Sternerfassungssystems eingefangen wird,
- der Satellit um die optische Achse des Sternerfassungssystems bis zur Erfassung der Erde durch das Erderfassungssystem gedreht wird und die Erde in der optischen Achse dieses Erderfassungssystems eingefangen wird.

2. Verfahren nach Anspruch 1, dadurch gekennzeichnet, daß die optische Achse dieses Sonnenerfassungs-Untersystems zur Rollachse parallel ist.

3. Verfahren nach Anspruch 1 oder Anspruch 2, dadurch gekennzeichnet, daß diese Ausrichtung der Sonnenrichtung im Gesichtsfeld des Sonnenerfassungs-Untersystems zu den optischen Achsen dieses Sonnenerfassungs-Untersystems und des Sternerfassungssystems im wesentlichen koplanar ist.

4. Verfahren nach einem beliebigen der Ansprüche 1 bis 3, dadurch gekennzeichnet, daß bei der Drehung um diese Ausrichtung für jeden Stern der Gruppe seine Koordinaten in dem Gesichtsfeld des Sternerfassungssystems ermittelt werden und der Abstand zwischen zwei der Sterne der Gruppe mit dem Abstand verglichen wird, der durch die Liste für jedes Sternenpaar, das einen Teil von ihr bildet, vorhergesagt wurde, und diese beiden Sterne der Gruppe mit dem Sternenpaar der Liste identifiziert wird, das, abgesehen von einer vorbestimmten Abweichung, diesen selben Abstand hat.

5. Verfahren nach Anspruch 4, dadurch gekennzeichnet, daß außerdem für jeden Stern eine seine Helligkeit darstellende Größe gemessen wird, und die beiden Sterne, zwischen denen der Abstand gemessen wird, die beiden Sterne der Gruppe sind, die die hellsten sind.

6. Verfahren nach einem beliebigen der Ansprüche 1 bis 5, dadurch gekennzeichnet, daß diese Liste 10 bis 300 Sterne enthält, die durch ihre Größe, ihre Rektaszension und ihre Deklination bezüglich eines Trägheitsbezugssystems gekennzeichnet sind.

7. Verfahren nach einem beliebigen der Ansprüche 1 bis 6, dadurch gekennzeichnet, daß diese Sternengruppe während eines Drehungswegs um diese Ausrichtung erfaßt wird, der eine Winkelamplitude höchstens gleich 180° hat.

8. Vorrichtung zur Erdaquisition auf der Grundlage eines sonnengerichteten Modus durch einen Satelliten, der auf einem Erdorbit mit einer Neigung von weniger als 10° bezüglich des Äquators umläuft, der dazu bestimmt ist, um Roll-, Nick- und Gierachsen herum lagestabilisiert zu werden, und der ein zweiachsiges Erderfassungssystem (2), das eine optische Achse (Zst) hat, die dazu bestimmt ist, im wesentlichen parallel zur Gierachse zur Erde hin ausgerichtet zu werden, ein zweiachsiges Sternerfassungssystem (4), das eine optische Achse (Ysp) hat, die dazu bestimmt ist, im wesentlichen parallel zur Nickachse zum Polarstern hin ausgerichtet zu werden, ein Sonnenerfassungssystem, das ein zweiachsiges Sonnenerfassungs-Untersystem (3) aufweist, das eine optische Achse (Xss) hat, die zur optischen Achse des Sternerfassungssystems im wesentlichen rechtwinklig ist und zur optischen Achse des Erderfassungssystems quer angeordnet ist, eine Winkelgeschwindigkeits-Erfassungseinheit (5), die dazu ausgelegt ist, Geschwindigkeitsmessungen um drei Achsen zu geben, eine Betätigungseinheit (6), die dazu bestimmt ist, auf den Satelliten einwirkende Steuermomente zu erzeugen, und eine Verarbeitungseinheit (7) aufweist, die zwischen den Erfassungssystemen und der Winkelgeschwindigkeits-Erfassungseinheit und der Betätigungseinheit verbunden ist und dazu ausgelegt ist, Steuerbefehle für diese Betätigungseinheit auf der Grundlage von Meßsignalen zu erzeugen, die durch diese Erfassungssysteme und diese Winkelgeschwindigkeits-Erfassungseinheit geliefert werden, wobei diese Vorrichtung in der Verarbeitungseinheit enthalten ist und dadurch gekennzeichnet ist, daß sie umfaßt:

- einen Messungsverarbeitungs-Logikblock (21), der dazu ausgelegt ist, auf der Grundlage dieser Meßsignale im Bezugssystem der Roll-, Nick- und Gierachsen Koordinaten der Sonnenrichtung und der momentanen Geschwindigkeit des Satelliten sowie Roll-, Nick- und Gierwinkel zu bestimmen,

- einen Polarsternidentifizierungs-Logikblock (23), der dazu ausgelegt ist, auf der Grundlage der Meßsignale des Sternerfassungssystems und der durch den Messungsverarbeitungs-Logikblock (21) gelieferten Koordinaten und Winkel durch das Sternerfassungssystem erfaßte Sterne mit in einer Liste enthaltenen Sternen zu identifizieren, das Eintreten des Polarsterns in dieses Sternerfassungssystem vorherzusehen und Identifizierungsdaten zu erzeugen,

- einen Akquisitionsuntermoden-Verknüpfungsblock (22), der dazu ausgelegt ist, auf der Grundlage der durch den Messungsverarbeitungs-Logikblock gelieferten Koordinaten und Winkel und der durch den Polarsternidentifizierungs-Logikblock gelieferten Identifizierungsdaten Signale (SM) zur Auswahl des Akquisitionsuntermodus zu erzeugen, und

- einen Lagesteuerung-Logikblock, der dazu ausgelegt ist, auf der Grundlage der Signale zur Wahl des Akquisitionsuntermodus und der durch den Messungsverarbeitungs-Logikblock gelieferten Koordinaten und Winkel an die Betätigungseinheit angelegte Steuersignale zu erzeugen, die derart ausgelegt sind,

* daß sie in einem ersten Untermodus die optische Achse des Sternerfassungssystems einen Kegelabschnitt um die Richtung der Sonne herum bestreichen lassen, der einen Spitzenhalbwinkel. mindestens etwa gleich der Winkelabweichung zwischen den jeweiligen Richtungen der Sonne und des Polarsterns hat,

\* daß sie in einem zweiten Untermodus die Drehung des Satelliten bremsen,

\* daß sie in einem dritten Untermodus den Polarstern in dem Sternerfassungssystem einfangen,

\* daß sie in einem vierten Untermodus den Satelliten bezüglich der Nickbewegung drehen lassen, indem sie den Polarstern eingefangen halten,

\* daß sie in einem fünften Untermodus die Erde in dem Erderfassungssystem einfangen.

9. Vorrichtung nach Anspruch 8, dadurch gekennzeichnet, daß die durch den Polarsternidentifizierungs-Logikblock erzeugten Identifizierungsdaten ein binäres Signal (Idp), das sein Niveau ändert, wenn der Polarstern identifiziert ist, und ein Winkelsignal (ΔΦp) enthalten, das die Winkelabweichung zwischen der Polarrichtung und der optischen Achse des Sternerfassungssystems darstellt.

10. Vorrichtung nach Anspruch 8 oder 9, dadurch gekennzeichnet, daß der Lagesteuerung-Logikblock eine Gruppe (25) von Reglern und Begrenzern aufweist, die für jeden Untermodus geeignet sind.

11. Vorrichtung nach Anspruch 10, dadurch gekennzeichnet, daß die Regler linear sind.

12. Vorrichtung nach Anspruch 10 oder Anspruch 11, dadurch gekennzeichnet, daß der Lagesteuerung-Logikblock am Ausgang der Gruppe von Reglern und Begrenzern Filter aufweist.

13. Vorrichtung nach Anspruch 12, dadurch gekennzeichnet, daß die Filter vom digitalen Typ der zweiten Ordnung sind.

14. Vorrichtung nach Anspruch 12 oder Anspruch 13, dadurch gekennzeichnet, daß der Lagesteuerung-Logikblock am Ausgang der Filter Modulatoren aufweist.

15. Vorrichtung nach Anspruch 14, dadurch gekennzeichnet, daß die Modulatoren vom Typ PRM, d.h. "Pseudo-Rate Modulator", sind.

16. Vorrichtung nach einem beliebigen der Ansprüche 8 bis 15, dadurch gekennzeichnet, daß die Betätigungseinheit Düsen (6) aufweist und der Lagesteuerung-Logikblock eine Logik (28) zur Auswahl von Düsen aufweist.

17. Vorrichtung nach Anspruch 16, dadurch gekennzeichnet, daß die Logik zur Auswahl von Düsen verkabelt oder in einen an Bord befindlichen Speicher eingebaut ist, der einen Teil eines Bordrechners bildet.

## Claims

1. Earth acquisition method for a satellite in Earth orbit at an inclination of less than 10° to the equator adapted to be stabilized in attitude about roll, pitch and yaw axes and comprising a 2-axis Earth sensing system (2) having an optical axis (Zst) adapted to be pointed towards the Earth substantially parallel to the yaw axis, a 2-axis star sensing system (4) having an optical axis (Ysp) adapted to be pointed towards the Pole Star substantially parallel to the pitch axis, and a Sun sensing system comprising a 2-axis Sun sensing sub-system (3) having an optical axis (Xss) substantially orthogonal to the optical axis of the star sensing system and transverse to the optical axis of the Earth sensing system, wherein, starting from a Sun pointing attitude in which the optical axis of the Sun sensing sub-system is pointed towards the Sun:

- an angular displacement of the satellite is commanded to move the Sun direction into an orientation (S') which in the field of view of the Sun sensing sub-system (3) is at an angle $\lambda$ other than 90° to the optical axis of the star sensing system (4), said angle $\lambda$ satisfying the condition:

$$90° - \delta s - Fspx < \lambda < 90° - \delta s + Fspx$$

where $\delta s$ is the inclination of the Sun relative to the equator and Fspx is the angular half-amplitude of the field of view of the star sensing system (4) in a plane of the satellite containing the optical axis of the star sensing system and said orientation (S'),

- the satellite is rotated about said orientation (S') so that the optical axis of the star sensing system describes part of a cone having its axis directed towards the Sun and a half-angle equal to $\lambda$,

- a group of at least two stars is sensed and compared with stars in a catalog predetermined as a function of $\lambda$ and listing stars, including the Pole Star, likely to be sensed during said rotation about said orientation, said stars of said group are identified and the time at which the optical axis of the star sensing system will point substantially towards the Pole Star is predicted,
- said rotation is braked before said time and the Pole Star is then captured on the optical axis of the star sensing system,
- the satellite is rotated about the optical axis of the star sensing system until the Earth is sensed by the Earth sensing system and the Earth is captured on the optical axis of the Earth sensing system.

2. Method according to claim 1 characterized in that the optical axis of said Sun sensing sub-system is parallel to the roll axis.

3. Method according to claim 1 or claim 2 characterized in that said orientation of the direction of the Sun in the field of view of the Sun sensing sub-system is substantially coplanar with the optical axes of said Sun sensing sub-system and the star sensing system.

4. Method according to any one of claims 1 to 3 characterized in that on rotation about said orientation the coordinates of each star of the group are measured in the field of view of the star sensing system and the distance between two stars o'f the group is compared with the distance predicted by the catalog for each pair of stars included therein and said two stars of the group are identified with the pair of stars from the catalog at the same distance apart, to the nearest predetermined difference.

5. Method according to claim 4 characterized in that a magnitude of each star is further measured representative of its brightness and the two stars between which the distance is measured are the brightest two stars of the group.

6. Method according to any one of claims 1 to 5 characterized in that said catalog contains between 10 and 300 stars characterized by their magnitude, their right ascension and their declination relative to an inertial frame of reference.

7. Method according to any one of claims 1 to 6 characterized in that said group of stars is sensed during rotation about said orientation having an angular amplitude at most equal to 180°.

8. Device for Earth acquisition from a Sun pointing attitude by a satellite in Earth orbit inclined at less than 10° to the equator adapted to be attitude stabilized about roll, pitch and yaw axes and comprising a 2-axis Earth sensing system (2) having an optical axis (Zst) adapted to be pointed towards the Earth substantially parallel to the yaw axis, a 2-axis star sensing system (4) having an optical axis (Ysp) adapted to be pointed towards the Pole Star substantially parallel to the pitch axis, a Sun sensing system comprising a 2-axis Sun sensing sub-system (3) having an optical axis (Xss) substantially orthogonal to the optical axis of the star sensing system and transverse to the optical axis of the Earth sensing system, an angular speed sensing system (5) adapted to measure speeds about three axes, an actuator system (6) adapted to generate command torque on the satellite and a processing system (7) connected between the sensing systems and the angular speed sensing system and the actuator system and adapted to generate command instructions for said actuator system from measurement signals supplied by said sensing systems and said angular speed sensing system, said device being included in the processing system and characterized in that it comprises:

- measurement processing logic (21) adapted to determine from said measurement signal coordinates in the roll, pitch and yaw axis frame of reference of the direction of the Sun and of the instantaneous speed of the satellite and roll, pitch and yaw angles,
- Pole Star identification logic (23) adapted on the basis of measurement signals from the star sensing system and coordinates and angles supplied by the measurement processing logic (21) to identify stars sensed by the star sensing system with stars contained in a catalog, to predict when the Pole Star comes into the star sensing system, and to generate identification data,
- an acquisition sub-mode chaining unit (22) for generating acquisition sub-mode selection signals (SM) from the coordinates and angles supplied by the measurement processing logic and the identification data supplied by the Pole Star identification logic, and
- attitude control logic adapted to generate, from the acquisition sub-mode selection signals and the coordinates and angles supplied by the measurement processing logic, command signals applied to the actuator system whereby:

  * in a first sub-mode, the optical axis of the star sensing system is scanned in a cone around the direction of the Sun having a half-angle at least approximately equal to the angular offset between the respective Sun and Pole Star directions,

* in a second sub-mode, rotation of the satellite is braked,
* in a third sub-mode, the Pole Star is captured in the star sensing system,
* in a fourth sub-mode, the satellite is rotated in pitch and the Pole Star is maintained captured,
* in a fifth sub-mode, the Earth is captured in the Earth sensing system.

9. Device according to claim 8 characterized in that the identification data generated by the Pole Star identification logic includes a binary signal (Idp) which changes level when the Pole Star is identified and an angular signal ($\Delta\Phi p$) representing the angular offset between the Pole Star direction and the optical axis of the star sensing system.

10. Device according to claim 8 or claim 9 characterized in that the attitude control logic includes a set (25) of regulators and limiters specific to each sub-mode.

11. Device according to claim 10 characterized in that the regulators are linear.

12. Device according to claim 10 or claim 11 characterized in that the attitude control logic comprises filters at the output of the set of regulators and limiters.

13. Device according to claim 12 characterized in that the filters are second order digital filters.

14. Device according to claim 12 or claim 13 characterized in that the attitude control logic includes modulators at the filter outputs.

15. Device according to claim 14 characterized in that the modulators are Pseudo-Rate Modulators.

16. Device according to any one of claims 8 to 15 characterized in that the actuator system includes thrusters (6) and the attitude control logic includes thruster selection logic (28).

17. Device according to claim 16 characterized in that the thruster selection logic is hardwired or stored in onboard memory which is part of an onboard computer.

SOLEIL

POLAIRE

Ysp

Xsp

Zsp

Xss1

Yss1

Xss2

Zss2

4

1

6

3b

3a

X

6

6

6

2

Yst

Xst

Zst

5

7

6

Z

TERRE

Y

Fig.1

Fig.2

Fig.3

24

Fig.4

Fig. 5

LOGIQUE DE COMMANDE D'ATTITUDE — 24

LIMITEURS ET REGULATEURS — 25

FILTRES — 26

MODULATEURS — 27

LOGIQUE DE SELECTION TUYERES — 28

2A 2B 3A 3B 4A 4B 5A 5B 6A 6B 7A 7B

Ha, He, Tm
Ucx, Ucy, Ucz
Ufx, Ufy, Ufz
Ux, Uy, Uz

Lpx Ldx Kpx Kdx
Lpy Ldy Kpy Kdy
Lpz Ldz Kpz Kdz

Srx Sry Srz Sbx Sby Sbz SM Φsp Ψsp Φst θst ωgx ωgy ωgz
ωrp ωcp ωrt

LOGIQUE D'ENCHAINEMENT DES SOUS_MODES — 22
Δtp1 Δtp4
ΔΦp1 ΔΦp2
SMtc
αs, δs

IDENTIFICATION DE LA POLAIRE — 23
CATALOGUE D'ETOILES
Idp
ΔΦp

TRAITEMENT DES MESURES — 21
Pss1 Pss2 Psp Pst
Pxo, Pyo, Pzo

Sbx Sby Sbz Φsp Ψsp Φst θst ωgx ωgy ωgz

DETECTEURS SOLAIRES
NS1 NS2

DETECTEUR DE TERRE
αst βst

GYROMETRES
αgx αgy αgz

DETECTEUR DE POLAIRE
xsp zsp
Msp

Fig.6

Fig.7

Polaire

Zi

P

Soleil

S

Terre

δ s

Yi

Zr

4

Z

α s

Xr

Yr

Xi

X

Y

Fig.8

Fig.9

Polaire

Soleil

P Zi

Terre

S

δs

Yi

4

αs

Z

2

X

Xi

Y

Fig.10

Fig.11

Fig.12

Fig.13

Fig.14

Fig.15

$$\frac{a_{x0} + a_{x1} Z^{-1} + a_{x2} Z^{-2}}{b_{x0} + b_{x1} Z^{-1} + b_{x2} Z^{-2}}$$

Ux → → Ufx

$$\frac{a_{y0} + a_{y1} Z^{-1} + a_{y2} Z^{-2}}{b_{y0} + b_{y1} Z^{-1} + b_{y2} Z^{-2}}$$

Uy → → Ufy

26

$$\frac{a_{z0} + a_{z1} Z^{-1} + a_{z2} Z^{-2}}{b_{z0} + b_{z1} Z^{-1} + b_{z2} Z^{-2}}$$

Uz → → Ufz

Fig.16

27

MODULATEUR PRM

X(t) → 1 →

X(t) = Ufi
i = x,y,z

R(t)

Y(t)

Y(t) = Uci
i = x,y,z

$$\frac{1}{1+Tm.p}$$

Fig.17